Europäisches Patentamt

European Patent Office

Office européen des brevets

(19)

(11) EP 1 521 240 A1

(12) EUROPEAN PATENT APPLICATION

(43) Date of publication:
06.04.2005 Bulletin 2005/14

(51) Int Cl.⁷: G10L 19/04, G10L 21/02,
H04B 3/20, H04M 9/08

(21) Application number: 03022250.9

(22) Date of filing: 01.10.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(71) Applicant: SIEMENS AKTIENGESELLSCHAFT
80333 München (DE)

(72) Inventors:
• Beaugeant, christophe, Dr.
81737 München (DE)
• Dütsch, Nicolas
80809 München (DE)
• Heiss, Herbert, Dr.
82008 Unterhaching (DE)
• Taddei, Hervé, Dr.
81543 München (DE)

(54) **Speech coding method applying echo cancellation by modifying the codebook gain**

(57) The invention refers to a method for encoding an acoustic signal ($y(n)$) containing a speech component ($s(n)$) and an echo component ($e(n)$) by using an analysis through synthesis method, wherein for encoding the acoustic signal is compared with a synthesised signal for a time interval, the said synthesised signal being described by using a fixed codebook and an associated fixed gain, comprising the steps:

- Estimating the energy of the speech component ($s(n)$) of said acoustic signal ($y(n)$) by using the estimated fixed gain ($g_s$) of the speech component ($s(n)$);
- Estimating the energy of the echo component ($e(n)$) of said acoustic signal ($y(n)$) by using a fixed gain ($g_e(k)$) of the echo component;
- Forming a ratio (SER) of the energy of the speech component ($s(n)$) and of the energy of the echo component ($e(n)$);
- Deriving from the ratio a modification parameter ($H(k)$) for modifying the fixed gain ($g_y(k)$ of the acoustic signal.

FIG 4

Printed by Jouve, 75001 PARIS (FR)

**Description**

The invention refers to a encoding method using an analysis by synthesis system.

Speech signals are often encoded using linear prediction. This is e.g. realized by using CELP (Code Excited Linear Prediction) encoders, where a synthetically produced speech signal is approximated in respect with the original speech signal. The synthetic signal is described by so called codebooks, which contain a variety of excitation signals and respective gains for amplifying or attenuating the excitation signals.

The excitation signals are fed into a filter modelling the vowel tract of a human and the result of the filtering is compared with the original speech signal. The excitation signals and gains are chosen such that the synthetic signal approximates the original signal.

As codebooks mostly a so-called adaptive codebook for describing periodic components of speech and a fixed codebook are being used.

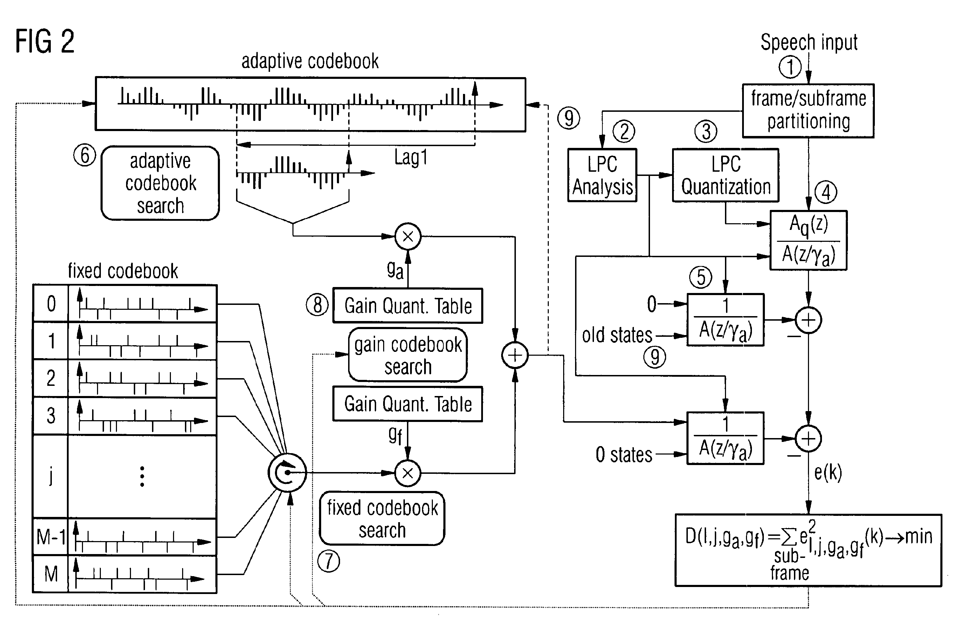

This will be described in greater detail in reference with Fig. 2 using an example from the AMR (Adaptive Multi Rate Codec, which can be used for GSM (Global System of Telecommunications) applications and which is mandatory for UMTS (Universal Mobile Telecommunications System).

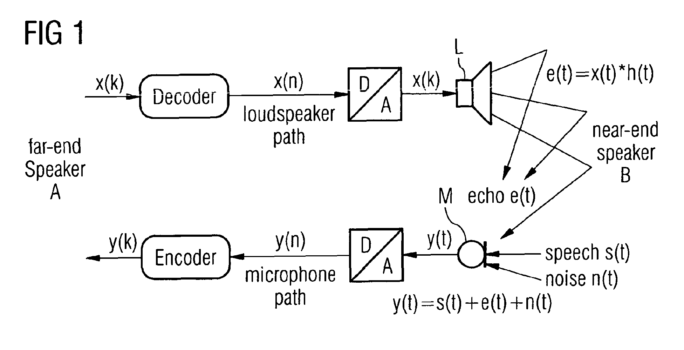

First a model of a communication system derived from a end-to-end conversation of at least two communication devices will be described with reference to Fig. 1. The signal or the voice of one speaker, the near-end-speaker B, is recorded by a microphone M and digitized for encoding the signal in a encoder as a preparation for a transmission. The encoding may comprise e.g. source and channel coding.

This coded signal is transmitted over a noisy channel, i.e. that the signal experiences degradation by the noise, to the counterpart of the conversation, where it is decoded in a decoder, and converted into an analog signal that can be spread over a loudspeaker L. The system can be considered as symmetric, thus only one side needs to be regarded.

The other part of the conversation, the far-end speaker A, is linked with speaker B through the so-called loudspeaker path, whereas the near-end speaker B is linked with the far-end speaker A through the microphone path.

Since speech signals are analog signals, they have to be sampled and converted back for coding reasons. In the framework of this application the index "t", which denotes a time instant explicitly, refers to analog signals whereas digital signals are noted by index "n" or "k", which denote a certain time interval, e.g. a frame or a subframe. "k" references source coded signals, while the digital uncompressed representation of speech is indexed with "n".

The voice of the far-end speaker A is transmitted to the loudspeaker at speaker B and converted to sound waves, so that the near-end speaker is able to understand the other talker. In the same way, the voice of the near-end speaker is converted to a digital signal by the microphone and the A/D-transducer. Besides the near-end speaker's voice, environmental noise and reflected sound waves of the loudspeaker output are recorded by the microphone. Therefore the microphone signal y(t) is a sum of the near-end speech s(t), of the noise n(t) and of the reflected signal or (acoustic) echo signal e(t)

$$(t) = s(t)+e(t)+n(t) \qquad (1)$$

This is describing the so-called double-talk situation in contrast to the single-talk situation. In the following the noise n(t) is assumed to be 0.

The single-talk mode is characterized by only one person talking. If speaker B is talking, the microphone signal is

$$y(t) = s\ (t)_{e(t)\ =\ 0} \qquad (2)$$

$$y(t) = e(t)_{s(t)\ =\ 0} \qquad (3)$$

if only the far-end speaker is talking.

In double-talk both persons are talking simultaneously, so the microphone signal is the sum of the near-end speaker's voice and the echo of the far-end speaker's voice

The main problem of acoustic echo e(t) is that the speaker's own voice is transmitted back to him. This does not affect the quality of the conversation as long as twice the transmission time (transmission over loudspeaker and microphone path) is less or equal the reflection time of the speaker's own voice in his LRM system. Then the echo is masked. Unfortunately in mobile telephony or satellite telephony the transmission time is usually much longer. The result is that the far-end speaker A hears his own voice with a delay of about 160 ms in case of fixed to mobile network transmission. This decreases greatly the quality of the conversation, especially when the partner of the conversation is not talking.

In order to reduce the echo in the microphone signal y(t) the microphone signal y(t) is attenuated for speaker A if the near-end speaker B is talking. Thus less noise or echo will be transmitted from A to B while B is speaking.

The effect is that only a strongly reduced echo signal is transmitted to the far-end speaker as either the microphone path is attenuated.

The sound waves, which are excited by the diaphragm of the loudspeaker, spread in the LRM system with sonic speed. As they are reflected by objects and walls in this LRM system, there is a superposition of waves at the microphone. These sound waves are delayed and attenuated variably because of different propagation paths. So the echo signal e(t) is a sum of decreased and delayed signals x(t). This is modeled by the convolution of the loudspeaker signal $x(t)$ with the impulse response of the LRM system h(tau,t)

$$e(t) = x(t) * h(\tau,t) \tag{4}$$

where h $(\tau,t)$ is the channel response at observation time t to an impulse at t-tau. The impulse response is time-varying, depending on the motion of people, objects, loudspeaker or microphone in the LRM system.

The proper attenuation of the microphone signal depending on the energy of the echo signal is, however, complex to calculate.

Based on the foregoing description it is an object of the invention to provide a possibility to attenuate the microphone signal simply and adapted to the actual existence of echo.

This object is solved by the subject matter disclosed in the independent claims. Advantageous embodiments of the present invention will be presented in the dependent claims.

In a method for transmitting speech data said speech data are encoded by using an analysis through synthesis method. For the analysis through synthesis a synthesised signal is produced for approximating the original signal. The production of the synthesised signal is performed by using at least a fixed codebook with a respective fixed gain and optionally an adaptive codebook and a adaptive gain. The entries of the codebook and the gain are chosen such, that the synthesised signal resembles the original signal.

Parameters describing these quantities will be transmitted from a sender to a receiver, e.g. from a near-end speaker to a far-end speaker or vice versa.

The invention is based on the idea to modify, e.g. to attenuate, a microphone signal, e.g. the signal to be sent from a a near-end speaker to a far-end speaker, depending on the energy of the echo in order to achieve a signal undisturbed by echo, i.e. a clean signal. The energy of the echo is determined by using a estimated fixed gain of the speech signal.

Depending on the energy of the echo in comparison to the energy of the speech a modification factor is formed used to modify the fixed gain of the microphone signal, e.g. the signal to be sent. Said modification factor is derived particularly from the ratio of speech and echo energy, i.e. the signal to echo ratio. This method has the advantage of a low computational complexity.

The fixed gain of the speech signal can be estimated by using the signal to echo ratio in a previous time interval, e.g. the immediately preceding time interval or also an average of several preceding time intervals. This facilitates the estimation process, particularly because the echo signal may vary only slightly from one time interval to another.

The time intervals may be frames or subframes.

In a preferred embodiment the fixed gain of the echo component is determined by using an adaptive filter. A adaptive filter has variable filter coefficients. These coefficients are chosen such, that the fixed gain of the echo signal is approximated to the fixed gain of the signal.

Alternatively in another preferred embodiment the fixed gain of the echo signal is calculated on basis of the fixed gain of a loudspeaker signal. As has been explained previously the loudspeaker signal induces the echo component, e.g. by reflections on walls etc.

In another embodiment the periodicity of the speech signal is considered by choosing the fixed gain of a previous time interval as the fixed gain of the actual time interval. The time distance between the actual time interval and the previous time interval can be calculated using a correlation method.

An encoding apparatus set up for performing the above described encoding method includes at least a processing unit. The encoding apparatus may be part of a communications device, e.g. a cellular phone or it may be also situated in a communication network or a component thereof.

In the following the invention will be described by means of preferred embodiments with reference to the accompanying drawings in which:

Fig. 1:     depicts a schematic model of a communication between a far-end and a near-end speaker;
Fig. 2:     shows schematically the function of the AMR encoder;
Fig. 3:     shows schematically the function of the AMR decoder;
Fig. 4:     depicts a schematic model of echo cancellation, where the fixed gain of the microphone signal is filtered;
Fig. 5:     shows the non-linearity of a codec by example of the AMR codec
Fig. 6:     shows a flow chart of an embodiment of a echo gain estimation
Fig. 7:     shows an estimation of the fixed echo gain based on cross-correlation
Fig. 8:     shows an scheme of a least mean square method,
Fig. 9:     shows a convergence of the NLMS method or algorithm with varying stepsize and filter length;
Fig. 10:    shows the least mean square method used to adapt a fixed echo gain;
Fig. 11:    shows the convergence of the NLMS algorithm in the parameter domain.

## 1. Function of a encoder (Fig.2)

First the function of a speech codec is described by an special implementation of an CELP based codec, the AMR (Adaptive Multirate Codec) codec. The codec consists of a multi-rate, that is, the AMR codec can switch between the following bit rates: 12.2, 10.2, 7.95, 7.40, 6.70, 5.90, 5.15 and 4.75 kbit/s, speech codec, a source-controlled rate scheme including a Voice Activity Detection (VAD), a comfort noise generation system and an error concealment mechanism to compensate the effects of transmission errors.

Fig. 2 shows the scheme of the AMR encoder. It uses a LTP (long term prediction) filter. It is transformed to an equivalent structure called adaptive codebook. This codebook saves former LPC filtered excitation signals. Instead of subtracting a long-term prediction as the LTP filter does, an adaptive codebook search is done to get an excitation vector from further LPC filtered speech samples. The amplitude of this excitation is adjusted by a gain factor $g_a$.

The encoding of the speech is described now with reference to the numbers given in Fig. 2

1. The speech signal is processed block-wise and thus partitioned into frames and sub-frames. Each frame is 20 ms long (160 samples at 8 kHz sampling frequency) and is divided into 4 sub-frames of equal length.

2. LPC analysis of a Hamming-windowed frame.

3. Because of stability reasons, the LPC filter coefficients are transformed to Line Spectrum Frequencies (LSF). Afterwards these coefficients are quantized in order to save bit rate. This step and the previous are done once per frame (except in 12.2 kbit/s mode; the LPC coefficients are calculated and quantised twice per frame) whereas the steps 4 - 9 are performed on sub-frame basis.

4. The sub-frames are filtered by a LPC filter with re-transformed and quantised LSF coefficients. Additionally the filter is modified to improve the subjective listening quality.

5. As the encoding is processed block by block, the decaying part of the filter, which is longer than the block length, has to be considered by processing the next sub-frame. In order to speed up the minimization of the residual power described in the following, the zero impulse response of the synthesis filter excited by previous sub-frames is subtracted.

6. The power of the LPC filtered error signal e(n) depends on four variables: the excitation of the adaptive codebook, the excitation of the fixed codebook and the respective gain factors $g_a$ and $g_f$. In order to find the global minimum of the power of the residual signal and as no closed solution of this problem exists, all possible combinations of these four parameters have to be tested experimentally. As the minimization is hence too complex, the problem is divided into subproblems. This results in a suboptimal solution, of course. First the adaptive codebook is searched to get the optimal lag L and gain factor $g_{a,L}$. Afterwards the optimal excitation scaled with the optimal gain factor is synthesis-filtered and subtracted from the target signal. This adaptive codebook search accords to a LTP filtering as shown.

7. In a second step of the minimization problem the fixed codebook is searched. The search is equivalent to the previous adaptive codebook search. I.e. it is looked for the codebook vector that minimizes the error criteria. Afterwards the optimal fixed gain is determined. The resulting coding parameters are the index of the fixed codebook vector J and the optimal gain factor $g_{f,J}$.

8. The scaling factors of the codebooks are quantized jointly (except in 12.2 kbit/s mode - both gains are quantized scalar), resulting in a quantization index, which is also transmitted to the decoder.

9. Completing the processing of the sub-frame, the optimal excitation signal is computed and saved in the adaptive codebook. The synthesis filter states are also saved so that this decaying part can be subtracted in the next sub-frame.

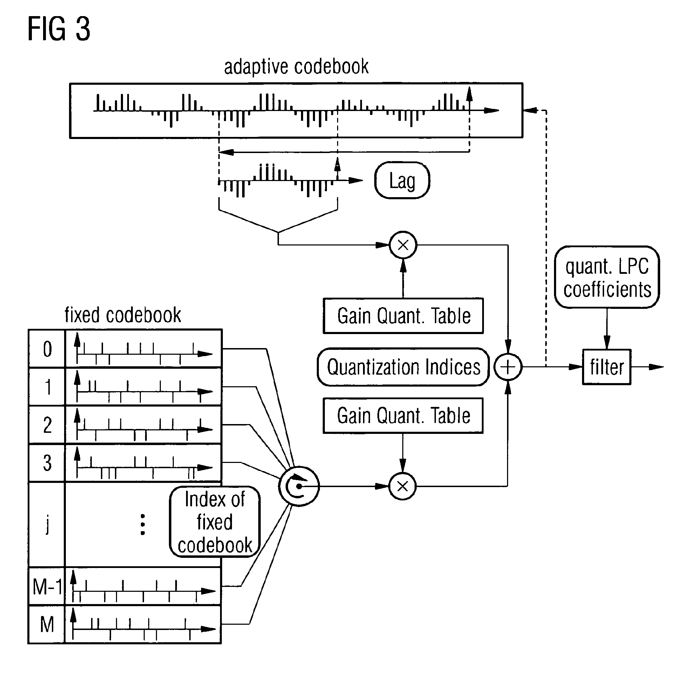

**2. Function of a decoder (Fig. 3)**

Now the decoder is described in reference with Fig. 3

As shown in the previous section, the encoder transforms the speech signal to parameters which describe the speech. We will refer to these parameters, namely the LSF (or LPC) coefficients, the lag of the adaptive codebook, the index of the fixed codebook and the codebook gains, as "speech coding parameters". The domain will be called " (speech) codec parameter domain" and the signals of this domain are subscripted with frame index $k$.

Fig. 3 shows the signal flow of the decoder. The decoder receives the speech coding parameters and computes the excitation signal of the synthesis filter. This excitation signal is the sum of the excitations of the fixed and adaptive codebook scaled with their respective gain factors.
After the synthesis-filtering is performed, the speech signal is post-processed.

**3. Echo Cancellation on Parameters**

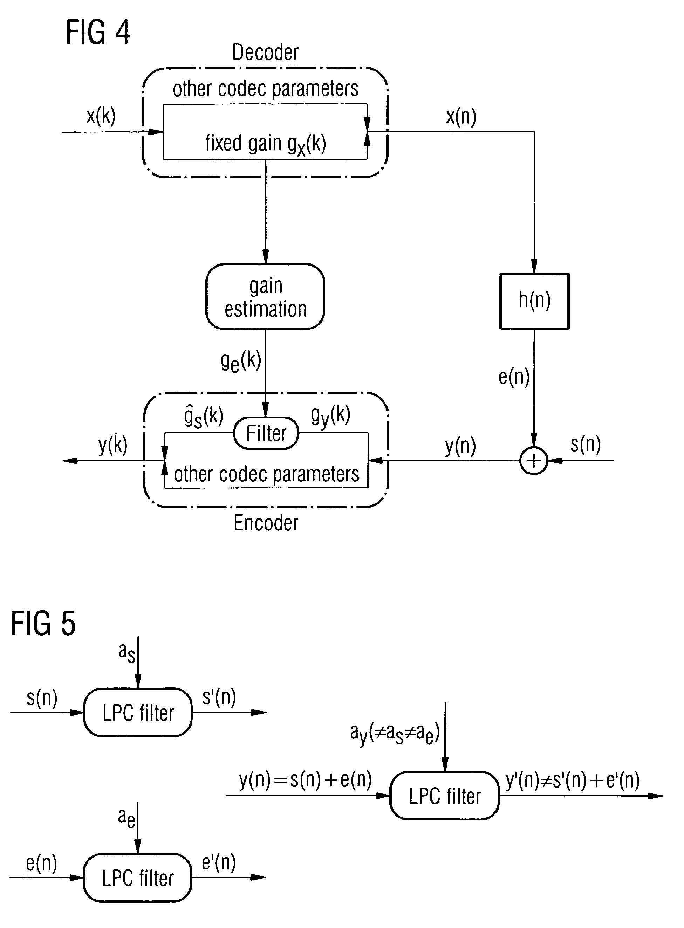

Now there is described in reference with Fig. 4 an echo cancellation method wherein only the microphone path involving y(k) is modified by only modifying the gain of the fixed codebook in the encoder. The changing of this parameter is done on sub-frame basis using a filter, which is described in the following. The filter is principally based on a ratio of fixed gains of the clean speech and of the echo signal. As the encoder has no access to any of these signals, the gain of the speech is approximated whereas the echo gain is estimated.

Fig. 4 shows the general principle of a method according to a preferred embodiment. The microphone signal *y(n)* is the sum of *s(n)* and *e(n).* This signal is encoded resulting in the bit stream *y(k).*
The basic idea is the modify the fixed gain of the microphone signal $g_{y(k)}$ in order to cancel the acoustic echo.
Accordingly the fixed gain $g_{y(k)}$ is filtered, thus transforming in $g_s(k)$. Furthermore the fixed gain obtained by the decoder $g_x(k)$ is used to estimate the (virtual) fixed gain of the echo signal $g_e(k)$.

Furthermore additional filters may be applied to the fixed gain $g_y(k)$, where k denotes a time interval, e.g. a subframe.

The gain estimator process is detailed in the below. It is emphasized that after LPC filtering the resulting signal is no longer the sum of the filtered speech and echo. This is depicted in Fig. 5

In Fig. 5, first the speech s(n) is analyzed in order to get a set of LPC coefficients a. The LPC filtered speech is denoted as s'(n). The same is done with the echo e(n) resulting in e'(n) with coefficients $a_e$. As long as the echo is not a scalar weighted copy of the speech signal e(n) $\neq \alpha$*s(n), what is normally true, the auto-correlation functions are not directly proportional and therefore two different sets of filter coefficients are obtained during the LPC analysis.

If the microphone signal y(n) is analysed and filtered, the signal y'(n) is obtained. Because e(n) $\neq \alpha$*s(n), the microphone signal is not proportional to the speech or echo y(n)=s(n)+e(n) $\neq \Box$*s(n) $\neq \Box\Box$e(n) and thus the respective LPC coefficients $a_y$ are different to these of the speech and the echo signal. As all three signals are filtered with miscellaneous LPC filters, the modified microphone signal is no longer the sum of the filtered speech and echo y'(n) $\neq$ s' (n)+e'(n).

Since the LTP filter is based on a similar analysis equation as the LPC filter it can be shown further, that after LTP filtering (or the adaptive codebook search) the modified microphone signal is not additive linked with the modified speech and echo signal. Therefore different codebook vectors and different gains are obtained by the fixed codebook search.

Because of the non-linearity of the speech codec shown above, the gain of the microphone signal can not be written as the sum of the gains of speech and echo signal in double-talk mode. Thus equation (1) transforms in

$$g\_y(k)=f(g\_s(k),g\_e(k)) \tag{7};$$

**3.1.Example of filtering rules**

*Gain subtraction filter*

The filter presented here subtracts the estimated gain of the echo from the microphone gain $g_y(k)$. This filter H(k) can be written as

$$H(k) = \frac{SER(k)}{1 + SER(k)} ,$$

where *SER(k)* is the speech to echo ratio in the parameter domain

$$SER(k) = \frac{g_s(k)}{g_e(k)} \; .$$

As the encoder does not explicitly know the gain of the speech, the speech to echo ratio is approximated by

$$SER(k) = \beta \frac{H(k-1)g_y(k-1)}{\varepsilon g_e(k)} + (\beta-1) \frac{g_y(k)}{\varepsilon g_e(k)} \; ,$$

that means as a weighted sum of the signal component H(k-1)*$g_y$(k-1), that represents the speech in the subframe or frame preceeding the subframe or frame k and of a second signal component $g_y$(k), representing speech and echo. β is a weighting factor for the individual components.
An overestimation factor ε is introduced in order to ensure that the echo is rather overestimated than underestimated. Then for a subtraction of the echo component surely all echo is subtracted. In practice particularly the values β = 0.98 and ε=8/3 have shown to permit to obtain efficient echo reduction.

### 3.2 Echo gain estimation

### a)NLMS method

The NLMS method can be used to estimate the echo gain. For said method a set of loudspeaker gains $g_x(k)$ is multiplied by the filter coefficients of an adaptive filter

$$g_e(k) = \sum_{i=0}^{N-1} h_i(k) g_x(k-i) \; .$$

This efficient algorithm is computational intensive. Further details are described in sections 4 and 5.

### b) Method based on correlation analysis

The following method exhibits particularly a low computational complexity.
Principally, this method or algorithm or procedure or procedure step multiplies one loudspeaker gain from the present or the past with an multiplication factor *m(k)*. The loudspeaker gain is shifted by κ(*k*) sub frames

$$g_e(k) = m(k) g_x(k-\kappa(k)).$$

The parameters κ(*k*) and *m(k)* are obtained through a correlation analysis of the loudspeaker $g_x(k)$ and the microphone gain $g_{y(k)}$ and post-processed. This algorithm is explained in detail in section 5, where m is denoted as m$_{ratio}$.

### 4 Filtering the Gain of the Fixed Codebook

In the previous chapter it was shown that the gain loss control is a simple method to compensate the acoustic feedback by attenuating the loudspeaker signal as well as the microphone signal. Modifying the loudspeaker signal presents the advantage of decreasing the echo before it has been formed, but with the consequence that the near-end speaker is not able to understand clearly the voice of his counterpart. Therefore smarter methods that weaken the acoustic echo by modifying only speech codec parameters of the microphone path are introduced in this chapter.
In Fig. 4. one can see the scheme of the fixed gain modification. A filter is used to decrease the fixed microphone gain whereas the other codec parameters are kept unchanged. As this filter needs information about statistics of the echo signal the fixed gain of the loudspeaker signal $g_x(k)$ is used to estimate the fixed gain of the echo signal $g_e(k)$. This estimation is described in chapter 5. In this chapter two different filters are explained further. One is based on the subtraction of the estimated gain $g_e(k)$ from the microphone path gain $g_y(k)$, the other minimizes the mean squared error E {($g_s(k)$ - $g_s(k))^2$}, whereby $g_s(k)$ is the fixed gain of the speech signal *s(n)* and $g_s(k)$ is the modified gain of the microphone path signal *y(n)*.

**4.1 The subtraction filter**

The first filter which is introduced in this chapter is the (gain) subtraction filter. This filter is often used in noise suppression problems in the frequency domain [6] and can also be used in echo cancellation. Beneath the well known time and frequency domain, we introduce another domain, the so called parameter domain. The transformation from time to codec parameter domain in back is non-linear as the AMR codec is used to perform this operation. Thus to a signal in the time domain corresponds a set of signals in the parameter domain. Before the principle of the subtraction filter is transposed from the frequency domain to the codec parameter domain, it is explained in the frequency domain.

**4.1.1 Spectral subtraction**

The microphone signal $y(t)$ is the sum of the near-end speech $s(t)$ and the echo $e(t)$. Solving (2.4) for $s(t)$ and applying a Fourier transformation yields

$$S(f) = Y(f) - E(f), \tag{4.1}$$

whereas $S(f)$, $Y(f)$ and $E(f)$ are the Fourier transformed spectra of the signals $s(t)$, $y(t)$ and $e(t)$. This means that the spectrum of the near-end speech is obtained by subtracting the spectrum of the echo from the spectrum of the microphone signal. This is usually done by filtering the microphone signal with a filter $H(f)$

$$S(f) = H(f)Y(f) . \tag{4.2}$$

Inserting (4.1) in (4.2) and solving for $H(f)$ yields

$$H(f) = \frac{Y(f) - E(f)}{Y(f)} . \tag{4.3}$$

With $|E(f)|$ being the magnitude and $\phi_e(f)$ being the phase of $E(f)$ (the complex spectrum $Y(f)$ is also decomposed in this way) the subtraction filter gets to

$$H(f) = 1 - \frac{|E(f)|e^{\phi_e}(f)}{|Y(f)|e^{\phi_y}(f)} . \tag{4.4}$$

As the phase of the echo is not known a priori it is approximated with the phase of the microphone signal. Furthermore the magnitude is estimated during single-talk of the far-end, i.e. when the near-end speaker is not talking. Thus the subtraction filter is written as

$$H(f) = 1 - \frac{|(\hat{E}(f)|}{|Y(f)|} , \tag{4.5}$$

where $\hat{E}(f)$ stands for the estimated magnitude of the echo signal.

If at a certain frequency the estimated magnitude of the echo is zero then the filter is one at this frequency. Thus the corresponding frequency of the microphone signal is not decreased. However if the estimated magnitude of the echo is equal to the magnitude of the microphone signal, the filter is zero and the spectrum of the microphone signal is completely attenuated. In addition one has to take care that the estimation of the echo magnitude is not bigger that the magnitude of the microphone signal.

**4.1.2 Derivation of the gain subtraction filter**

In order to modify the gain of the fixed codebook we make a similar approach as in the frequency domain. A scalar filter $H(k)$ is introduced to change the fixed gain of the microphone signal to the fixed gain of the speech only signal

$$g_s(k) = H(k)g_y(k) . \tag{4.6}$$

As the fixed gain $g_y(k)$ is not the sum of the speech gain and the echo gain as explained in section 2.3.3, we can not solve explicitly for the speech gain according to (4.1) in the frequency domain. Therefore the microphone gain is substituted with Eq. (2.21) and (4.6) is reorganized getting

$$H(k) = \frac{g_s(k)}{f(g_s(k), g_e(k))}.$$ (4.7)

For the purpose of implementing the filter, the function $f(g_s(k), g_e(k))$ has to be concretized.

**Taylor approximation**

A result of the non-linearity of the AMR codec is, that the fixed gain of the microphone signal is a function of the gains of the speech and echo signal (2.21). To linearize this function a Taylor approximation is used. The approximation of a function $f$ depending on two variables $x$ and $y$ is

$$f(x, y) = \sum_{n=0}^{\infty} \frac{1}{n!} \left( (x - x_0) \frac{\partial}{\partial x} + (y - y_0) \frac{\partial}{\partial y} \right)^n f(x_0, y_0).$$ (4.8)

Applying a first order Taylor approximation to Eq. (4.7) with working point $g_{s0} = 0$ and $g_{e0} = 0$, introducing the abbreviations $\frac{\partial f(g_{s0}, g_{e0})}{\partial g_s} = \frac{\partial f}{\partial g_s}$, $\frac{\partial f(g_{s0}, g_{e0})}{\partial g_e} = \frac{\partial f}{\partial g_e}$ and including Eq. (2.22) the filter becomes

$$H(k) = \frac{g_s(k)}{\frac{\partial f}{\partial g_s} g_s(k) + \frac{\partial f}{\partial g_e} g_e(k)}.$$ (4.9)

By introducing a speech to echo ratio (SER) in the codec parameter domain

$$SER_S(k) = \frac{g_s(k)}{g_e(k)}$$ (4.10)

the scalar $H(k)$ finally gets to

$$H(k) = \frac{SER_S(k)}{\frac{\partial f}{\partial g_e} + \frac{\partial f}{\partial g_s} SER_S(k)}.$$ (4.11)

If the speech to echo ratio is very high the filter converges to $(\frac{\partial f}{\partial g_s})^{-1}$ and accordingly the fixed microphone gain is multiplied with this factor. Otherwise if the ratio is very low the filter converges to zero and thus the fixed gain of the microphone signal is canceled.

**Derivation coefficients in single-talk mode**

In section 2.3.3 it was shown that in single-talk mode the gain of the microphone signal is either the fixed gain of the near-end speaker or the gain of the echo signal. By using a first order Taylor approximation and to fulfill (2.19) and (2.20), Eq. (2.21) must become

$$g_y(k) = f(g_s(k), g_e(k)) = g_s(k) + g_e(k) + o(g_s(k)^2, g_e(k)^2).$$ (4.12)

This equation describes the relation between the fixed gains of the speech and echo signal and the microphone gain for all frame indices *k*.

Applying the Taylor approximation of order one to (4.12) yields the derivation coefficients designed for single-talk mode

$$\frac{\partial f}{\partial g_s}\Big|_{\substack{\text{single}\\\text{talk}}} = 1 \quad \text{and} \quad \frac{\partial f}{\partial g_e}\Big|_{\substack{\text{single}\\\text{talk}}} = 1 \,. \tag{4.13}$$

By inserting these coefficients in (4.11) the filter *H(k)* is written as

$$H_{s.t.}(k) = \frac{SER_S(k)}{1 + SER_S(k)}. \tag{4.14}$$

Compared to the subtraction filter in the frequency domain (4.5) one can see that the filter (4.14) seems to be completely different. But in fact with a Taylor approximation of order one and derivation coefficients equal to one, Eq. (4.14) can be reorganized to the same structure as the subtraction filter in the frequency domain

$$H_{s.t.}(k) = \frac{g_s(k)}{g_e(k) + g_s(k)} = \frac{g_y(k) - g_e(k)}{g_y(k)} = 1 - \frac{g_e(k)}{g_y(k)} \,. \tag{4.15}$$

The advantage of (4.14) is that it is bounded between one and zero and one has not to take care of a negative filter as possibly obtained by (4.15). However the disadvantage is that the gain of the speech signal is also not known and has to be estimated. The implementation of the speech to echo ratio is found in 4.1.3.

**Derivation coefficients in double-talk mode**

To calculate the derivation coefficients in double-talk mode we made the following experiment. Data of fixed gains is generated and the coefficients of a fitting polynomial are computed in a way that they solve a system of equations in least-squares sense. This means concretely that a speech file without speech pauses of 60 seconds duration (12000 sub-frames) is encoded while the gain of the fixed codebook is saved. This is also done with an echo file without speech pauses and the superposition of both files. Thus three different gain files are obtained. Finally, this data is used to solve the system of equations

$$Xz = y \,. \tag{4.16}$$

The data matrix **X** is a composite of the gain vectors of the speech and the echo file, whereas the data vector **y** is the gain vector of the summed speech and echo file

$$X = [g_s \ g_e] \qquad y = g_y \,. \tag{4.17}$$

The gain vectors are defined as

$$g_v = [g_v(0) \ ... \ g_v(K - 1)]^T \quad v \in \{s, e\} \,. \tag{4.18}$$

The vector **z** is the coefficient vector of the fitting polynomial. As the function (2.21) with taking into account of (2.22) is fit by a first order Taylor approximation the coefficient vector of the fitting polynomial becomes

$$z = [\frac{\partial}{\partial g_s} \ \frac{\partial f}{\partial g_e}]^T \,. \tag{4.19}$$

The overdetermined system of equations (4.16) is solved in least-squares sense by the pseudo-inverse or Moore-Penrose generalized inverse [11]

$$X^+ = (X^H X)^{-1} X^H .\qquad (4.20)$$

As all gains are elements of the real number space, the hermitian operation can be replaced by the transpose operation. Finally the coefficient vector is obtained by multiplying the pseudo-inverse with the microphone gain vector

$$z = X^+ y.\qquad (4.21)$$

In order to evaluate the results of the experiment described above the relative mean squared error of the approximated microphone gain is calculated

$$error = \frac{\sum_{\kappa=0}^{K-1}(g_y(\kappa) - \frac{\partial f}{\partial g_s}g_s(\kappa) + \frac{\partial f}{\partial g_e}g_e(\kappa))^2}{\sum_{\kappa=0}^{K-1} g_y^2(\kappa)} .\qquad (4.22)$$

The results of the experiment are shown in Tab. 4.1. Concerning the simulation of time-variant impulse responses the decoded speech file of the far-end speaker is convoluted with six different impulse responses. The impulse responses 1a-c named in the first row of Tab. 4.1 refer to the response in Fig. 2.2 a) whereas 2a-c refer to the impulse response in Fig. 2.2 b). The suffix a implies an unchanged impulse response - responses with suffix b or c are attenuated by 3 dB or 10 dB, respectively.

| impulse response | 1a | 1b | 1c | 2a | 2b | 2c |
|---|---|---|---|---|---|---|
| "optimal" vector z | $\begin{bmatrix}1.026\\1.327\end{bmatrix}$ | $\begin{bmatrix}0.992\\1.393\end{bmatrix}$ | $\begin{bmatrix}0.967\\1.363\end{bmatrix}$ | $\begin{bmatrix}0.983\\1.336\end{bmatrix}$ | $\begin{bmatrix}0.956\\1.379\end{bmatrix}$ | $\begin{bmatrix}0.966\\1.268\end{bmatrix}$ |
| *error* (percent) | 9.30 | 6.85 | 3.35 | 8.27 | 5.75 | 3.25 |
| vector z | $\begin{bmatrix}1\\4/3\end{bmatrix}$ | | | | | |
| *error* (percent) | 9.33 | 6.86 | 3.45 | 8.29 | 5.87 | 3.37 |
| vector z | $\begin{bmatrix}1\\1\end{bmatrix}$ | | | | | |
| *error* (percent) | 10.26 | 7.21 | 3.43 | 9.21 | 6.13 | 3.33 |

Table 4.1: Results of the determination of the derivation coefficients in double-talk mode

In the second and third row of the the table the "optimal" (in least-squares sense) vectors obtained by Eq. (4.21) and the corresponding relative error can be regarded. One can see at once that the more the echo is attenuated the smaller is the echo. Thus the effect of the non-linearity of the AMR codec is stronger by encoding powerful signals. The derivation coefficients can not be adapted during filtering of the fixed gain as the encoder processes the (summed) microphone signal and has no access to the speech only and echo only signal. Therefore the derivation vector z has to be set to a fixed value in double-talk mode before implementation. A suggestion of this vector is shown in the fourth row of Tab. 4.1 with the corresponding errors in the fifth row. Compared to the "optimal" errors the errors obtained by the fixed coefficient vector are only slightly bigger. It can be also seen that a more attenuated echo causes a smaller error. Further on the error derived from derivation coefficients designed for single-talk (4.13) is shown in the last row. This error is bigger than the error obtained by the fixed derivation vector for strong echo signals but equal or less smaller, if the echo is much attenuated.

Recapitulating, the derivation coefficients are fixed to

$$\frac{\partial f}{\partial g_s}\bigg|_{\substack{double\\talk}} = 1 \quad \text{and} \quad \frac{\partial f}{\partial g_e}\bigg|_{\substack{double\\talk}} = \frac{4}{3} \tag{4.23}$$

in double-talk mode. Thus the subtraction filter is obtained by

$$H_{d.t.}(k) = \frac{SER_S(k)}{\frac{4}{3} + SER_S(k)} \ . \tag{4.24}$$

**Variable derivation coefficients**

Another possibility to determine the derivation coefficients is to change them depending on the speech mode. This means to set them to (4.13) in single-talk mode or to (4.23) in double-talk mode, respectively.

$$\frac{\partial f}{\partial g_s}(k) = 1 \quad \text{and} \quad \frac{\partial f}{\partial g_e}(k) \begin{cases} 1 \ , \text{single talk} \\ \frac{4}{3} \ , \text{double talk} \end{cases} \tag{4.25}$$

By using this method a speech mode detection is needed. In this diploma thesis this approach will not be analyzed further as the basic implementations of the gain modification filters are tested first.

**4.1.3 Implementation**

In the diploma thesis the subtraction filter is implemented in single-talk version (4.14) as well as in double-talk version (4.24). As the gain of the near-end speech and of the echo is not known by the encoder the speech to echo ratio (4.10) is calculated recursively

$$SER_S(k) = \beta \frac{H(k-1)g_y(k-1)}{g_e(k)} + (1-\beta) \frac{g_y(k)}{g_e(k)} \ , \tag{4.26}$$

whereas $\hat{g}_e(k)$ is the estimated gain of the echo determined as described in the next chapter. The present gain of the near-end speech is the weightened sum of the approximated speech gain of the past sub-frame and the present microphone gain. This technique is described further in [5], where it is used to calculate a speech to perturbation ratio in the frequency domain. $\beta$ is of the interval [0 1] and defines the update factor of the SER. Our experiments showed that $\beta$ should be chosen little smaller than one. The recursive estimation of the speech to echo ratio has the advantage that the ratio is smoothed. Therefore huge differences of the estimated echo gain and the actual echo gain can be compensated if they only occur in a few non-consecutive sub-frames.

**4.2 The Minimum Mean Squared Error filter**

Another filter which modifies the microphone signal is the Minimum Mean Squared Error (MMSE) filter. In literature this filter is also called Wiener filter [22]. Like the introduction of the subtraction filter in the previous section the MMSE filter is explained first in the frequency domain and afterwards the principle is transposed to the parameter domain.

**4.2.1 The Wiener filter**

The filter derivated in this section is based on a statistical approach: it minimizes the cost function $J$ defined as the expectation of the squared euclidian difference of the (complex) spectrum of the speech signal $S(f)$ and the estimated spectrum $\hat{S}(f)$

$$J = E\{|S(f) - \overset{\wedge}{S}(f)|^2\} . \tag{4.27}$$

The estimated spectrum of the speech signal is obtained by filtering the microphone signal with the MMSE filter $G(f)$

$$\overset{\wedge}{S}(f) = G(f)\,Y(f). \tag{4.28}$$

Substituting the estimated spectrum of the speech signal in the cost function yields

$$
\begin{aligned}
J &= E\{(S(f) - G(f)Y(f))(S(f) - G(f)Y(f))^*\} \\
&= E\{S(f)S(f)^* - G(f)^*S(f)Y(f)^* - G(f)Y(f)S(f)^* + G(f)Y(f)G(f)^*Y(f)^*\} \\
&= E\{|S(f)|^2\} - G(f)^*E\{S(f)Y(f)^*\} - G(f)E\{Y(f)S(f)^*\} + |G(f)|^2 E\{|Y(f)|^2\} . \tag{4.29}
\end{aligned}
$$

As the complex cost function is minimized with respect to the complex filter it has to be derivated partially on the one hand with respect to the real part $G_r$ of the MMSE filter and on the other hand with respect to the imaginary part $G_i$ and the derivations are set equal to zero

$$\frac{\partial J}{\partial G_r} \overset{!}{=} 0 \quad \text{and} \quad \frac{\partial J}{\partial G_i} \overset{!}{=} 0 . \tag{4.30}$$

The cost function is written in its real and imaginary part

$$J = E\{|S(f)|^2\} + G_r^2 E\{|Y(f)|^2\} + G_i^2 E\{|Y(f)|^2\} - G_r(E\{S(f)\,Y(f^*)\} + E\{Y(f)\,S(f)^*\})$$

$$+jG_i(E\{S(f)\,Y(f)^*\} - E\{Y(f)\,S(f)^*\}). \tag{4.31}$$

and derivated w.r.t. the real and imaginary part of the filter

$$\frac{\partial J}{\partial G_r} = 2G_r E\{|Y(f)|^2\} - E\{S(f)\,Y(f)^*\} - E\{Y(f)\,S(f)^*\} = 0$$

$$\frac{\partial J}{\partial G_i} = 2G_i E\{|Y(f)|^2\} + jE\{S(f)\,Y(f)^*\} - jE\{Y(f)\,S(f)^*\} = 0 . \tag{4.32}$$

Solving for the real and imaginary part of the filter yields

$$G_r = \frac{E\{S(f)\,Y(f)^*\} + E\{Y(f)\,S(f)^*\}}{2E\{|Y(f)|^2\}}$$

$$G_i = -j\frac{E\{S(f)\,Y(f)^*\} - E\{Y(f)\,S(f)^*\}}{2E\{|Y(f)|^2\}} . \tag{4.33}$$

Finally the MMSE filter is obtained by

$$G(f) = G_r + jG_i = \frac{E\{S(f)Y(f)^*\}}{E\{|Y(f)|^2\}} = \frac{\Phi_{SY}(f)}{\Phi_{YY}(f)} , \tag{4.34}$$

where $\Phi_{YY}(f)$ is the power density spectrum of the microphone signal and $\Phi_{SY}(f)$ the cross power density spectrum of the speech and microphone signal.

With

$$\Phi_{YY}(f) = \Phi_{SS}(f) + \Phi_{EE}(f) + \Phi_{SE}(f) + \Phi_{ES}(f) = \Phi_{SS}(f) + \Phi_{EE}(f) \qquad (4.35)$$

and

$$\Phi_{SY}(f) = \Phi_{SS}(f) + \Phi_{SE}(f) = \Phi_{SS}(f) \qquad (4.36)$$

and introducing the abbreviation

$$SER_M(f) = \frac{\Phi_{SS}(f)}{\Phi_{EE}(f)} \qquad (4.37)$$

the MMSE filter is

$$G(f) = \frac{SER_M(f)}{1 + SER_M(f)} \cdot \qquad (4.38)$$

Thereby the fact is utilized that the near-end speech and the echo are assumed to be statistically independent and therefore their cross power density spectra $\Phi_{SE}(f)$ and $\Phi_{ES}(f)$ are zero. In contrast to the spectral subtraction filter the MMSE filter uses statistical values in order to modify the microphone signal.

### 4.2.2 Derivation of the gain MMSE filter

In the following the approach of the MMSE filter in the frequency domain is transfered to the parameter domain. The minimization problem is formulated as

$$\min E \{(g_s(k) - \hat{g}_s(k))^2\} \qquad (4.39)$$

whereupon $g_s(k)$ is the fixed gain of the speech signal and $\hat{g}_s(k)$ is the approximated gain of the speech. The latter gain is obtained by filtering the fixed gain of the microphone signal $g_y(k)$ with the (scalar) filter G(k)

$$\hat{g}_s(k) = G(k)g_y(k) \cdot \qquad (4.40)$$

When substituting $\hat{g}_s(k)$ of (4.39) with (4.40) and multiplying the expressions in brackets

$$E\{(g_s(k) - \hat{g}_s(k))^2\} = E\{\hat{g}_s(k)^2 - 2g_s(k)G(k)g_y(k) + G(k)^2 g_y(k)^2\} \qquad (4.41)$$

is obtained.

The minimization problem is solved by setting the derivation of (4.41) with respect to the scalar and real filter equal to zero

$$\frac{\partial}{\partial G(k)} E\left\{(g_s(k) - \hat{g}_s(k))^2\right\} = 2G(k)E\left\{g_y(k)^2\right\} - 2E\left\{g_s(k)g_y(k)\right\} \overset{!}{=} 0 \cdot \qquad (4.42)$$

Solving for the filter yields

$$G(k) = \frac{E\{g_s(k)g_y(k)\}}{E\{g_y(k)^2\}} \tag{4.43}$$

or with Eq. (2.21)

$$G(k) = \frac{E\{g_s(k)f(g_s(k),g_e(k))\}}{E\{f(g_s(k),g_e(k))^2\}} \; . \tag{4.44}$$

**Taylor approximation**

In order to handle the unknown gain function a first order Taylor approximation is done. With the same working point and abbreviations introduced in Eq. (4.9) the MMSE filter becomes

$$\begin{aligned}
G(k) \;\; &= \;\; \frac{E\left\{g_s(k)\left(\frac{\partial f}{\partial g_s}g_s(k) + \frac{\partial f}{\partial g_e}g_e(k)\right)\right\}}{E\left\{\left(\frac{\partial f}{\partial g_s}g_s(k) + \frac{\partial f}{\partial g_e}g_e(k)\right)^2\right\}} \\[2mm]
&= \;\; \frac{E\left\{\frac{\partial f}{\partial g_s}g_s(k)^2 + \frac{\partial f}{\partial g_e}g_e(k)g_s(k)\right\}}{E\left\{(\frac{\partial f}{\partial g_s})^2 g_s(k)^2 + 2\frac{\partial f}{\partial g_s}\frac{\partial f}{\partial g_e}g_s(k)g_e(k) + (\frac{\partial f}{\partial g_e})^2 g_e(k)^2\right\}} \; .
\end{aligned} \tag{4.45}$$

Furthermore it is assumed that the fixed gains of the speech and the microphone signal are statistically independent

$$E\{g_s(k)g_e(k)\} = E\{g_s(k)\}\,E\{g_e(k)\} \; . \tag{4.46}$$

The multiplication of the expected values can not be set to zero similar to the cross power density spectra of the speech and echo, as the gains are non-negative and therefore the mean values are certainly not zero. With the assumption of independent gains Eq. (4.45) gets to

$$G(k) = \frac{\frac{\partial f}{\partial g_s}E\{g_s(k)^2\} + \frac{\partial f}{\partial g_e}E\{g_s(k)\}\,E\{g_e(k)\}}{(\frac{\partial f}{\partial g_s})^2 E\{g_s(k)^2\} + 2\frac{\partial f}{\partial g_s}\frac{\partial f}{\partial g_e}E\{g_s(k)\}\,E\{g_e(k)\} + (\frac{\partial f}{\partial g_e})^2 E\{g_e(k)^2\}} \; . \tag{4.47}$$

By introducing the abbreviation for the speech to echo ratio

$$SER_M(k) = \frac{E\{g_s(k)^2\}}{E\{g_e(k^2)\}} \tag{4.48}$$

the Taylor approximated MMSE filter is at least written as

$$G(k) = \frac{\dfrac{\partial f}{\partial g_s}\,SER_M(k) + \dfrac{\partial f}{\partial g_e}\,\dfrac{E\{g_s(k)\}E\{g_e(k)\}}{E\{g_e(k)^2\}}}{(\dfrac{\partial f}{\partial g_e})^2 + (\dfrac{\partial f}{\partial g_s})^2 SER_M(k) + 2\dfrac{\partial f}{\partial g_s}\dfrac{\partial f}{\partial g_e}\dfrac{E\{g_s(k)\}E\{g_e(k)\}}{E\{g_e(k)^2\}}} \; . \tag{4.49}$$

**Derivation coefficients in single-talk mode**

By using the derivation coefficients designed for single-talk mode (4.13) the MMSE filter is simplified to

$$G_{s.t.}(k) = \frac{SER_M(k) + \dfrac{E\{g_s(k)\}E\{g_e(k)\}}{E\{g_e(k)^2\}}}{1 + SER_M(k) + 2\dfrac{E\{g_s(k)\}E\{g_e(k)\}}{E\{g_e(k)^2\}}} \cdot \qquad (4.50)$$

Compared to the Wiener filter in the frequency domain (4.38) the enumerator and the denominator are expanded by a term caused by non-symmetric density distributions with non-zero mean value of the fixed gains.

In the following a closer look at the extreme cases is taken. In single-talk of the far-end speaker, the speech to echo ratio (4.48) converges towards zero as the fixed gain of the near-end speech is certainly zero. Thus the mean value of the speech gain is also zero. Therefore the MMSE filter derives to

$$G_{s.t.}(k) = \lim_{SER_M \to 0} \frac{SER_M(k) + \frac{E\{g_s(k)\}E\{g_e(k)\}}{E\{g_e(k)^2\}}}{1 + SER_M(k) + 2\frac{E\{g_s(k)\}E\{g_e(k)\}}{E\{g_e(k)^2\}}} \overset{E\{g_s(k)\}=0}{=} 0 \ . \qquad (4.51)$$

In single-talk mode of the near-end speaker the filter converges towards one

$$G_{s.t.}(k) = \lim_{SER_M \to \infty} \frac{SER_M(k) + \frac{E\{g_s(k)\}E\{g_e(k)\}}{E\{g_e(k)^2\}}}{1 + SER_M(k) + 2\frac{E\{g_s(k)\}E\{g_e(k)\}}{E\{g_e(k)^2\}}} = 1 \ , \qquad (4.52)$$

as the speech to echo ratio gets very high. One sees clearly that the MMSE filter works properly in single-talk mode: the microphone path is not attenuated, if the near-end speaker is talking, but the microphone signal is attenuated completely, if only the far-end speaker is speaking.

**Derivation coefficients in double-talk mode**

In double-talk mode Eq. (4.49) derives to

$$G_{s.t.}(k) = \frac{SER_M(k) + \dfrac{4}{3}\dfrac{E\{g_s(k)\}E\{g_e(k)\}}{E\{g_e(k)^2\}}}{\dfrac{16}{9} + SER_M(k) + \dfrac{8}{3}\dfrac{E\{g_s(k)\}E\{g_e(k)\}}{E\{g_e(k)\}^2\}}} \qquad (4.53)$$

by using the set of derivation coefficients (4.23).

The possibility to change the derivation coefficients on the basis of the speech mode as described in section 4.1.2 will not be discussed further as due to the temporal restriction of the diploma theses to six month no additional speech mode detection on the basis of codec parameters can be developed in this period.

**4.2.3 Implementation**

In chapter 6 we will test the MMSE filter with derivation coefficients designed for single-talk mode as well as coefficients for double-talk mode. Both filters have a common definition of the speech to echo ratio. In the following the implementation of different expectations used to compute these filters is described.

In order to estimate the mean values of the fixed gains one has to keep in mind that these mean values change depending on the speech mode. For example in single-talk of the near-end speaker the echo signal is zero and thus the fixed echo gain is also zero. This implies a mean value of zero in this speech mode. In another speech mode the echo is present with non-zero echo gains and thus a non-zero mean-value is obtained. Because no speech mode detection is used a short-time mean value is computed to compensate the dependency of the gains on the speech mode. The estimated gains of the echo signal are saved in a buffer of length K to determine the mean value

$$\mathrm{E}\{g_e(k)\} = \frac{1}{K} \sum_{\kappa=0}^{K-1} \hat{g}_e(k - \kappa) \, . \tag{4.54}$$

Since the gain of the speech signal is not available at the encoder, the approximated speech gains $\hat{g}_s(k)$ are also saved in a buffer of length $K$ and the mean value is computed with these values

$$\mathrm{E}\{g_s(k)\} = \frac{1}{K} \sum_{\kappa=0}^{K-1} (H(k - \kappa - 1)g_y(k - \kappa - 1)) \, . \tag{4.55}$$

As at sub-frame k the filter is not yet calculated only approximated fixed gains of the near-end speech of the past can be saved in this buffer. If the length of the buffer is very long then it does not make much difference that the present approximated gain is not included in the calculation of the mean value.

The speech to echo ratio is calculated similarly: the squared estimated echo gain is saved in a buffer and the squared approximated speech gain is stored in another buffer. By summing up both buffers and dividing the SER is obtained

$$SER_M(k) = \frac{\mathrm{E}\{g_s^2(k)\}}{\mathrm{E}\{g_e^2(k)\}} = \frac{\frac{1}{K} \sum_{\kappa=0}^{K-1} (H(k - \kappa - 1)g_y(k - \kappa - 1))^2}{\frac{1}{K} \sum_{\kappa=0}^{K-1} \hat{g}_e^2(k - \kappa)} \, . \tag{4.56}$$

The results of applying the subtraction filter and the MMSE filter to modify the fixed codebook gain are shown in chapter 6. In the next chapter two methods to estimated the gain of the echo signal are presented.

## 5 Fixed Gain Estimation of the Acoustic Echo

In chapter 4 two filters which modify the fixed gain were introduced. It was shown that both filters need an estimation of the gain of the echo signal. Therefore we developed two different estimation methods. One method is based on the cross-correlation of the loudspeaker and the microphone gain, the other on the steepest descent process (towards biggest negative gradient).

### 5.1 Estimation based on correlation

The idea behind this method is to multiply a loudspeaker gain from the present or past (shifted $k_{opt}(k)$ sub-frames) with a variable scalar $m_{opt}(k)$ in order to get an estimated echo gain

$$\hat{g}_e(k) = m_{opt}(k)g_l(k - k_{opt}(k)) \, . \tag{5.1}$$

This is realized by an Finite Impulse Response (FIR) filter with one variable tap and the corresponding variable filter coefficient. The adjustment of these filter parameters $m_{opt}(k)$ and $k_{opt}(k)$ is based on a short-term cross-correlation analysis. The index of the maximum correlation factor is post-processed and used to shift the loudspeaker gain. Accordingly this gain is decreased by the ratio of the fixed gains obtained by the decoder and the encoder. This estimation algorithm we developed during the diploma thesis is presented in the following section.

### 5.1.1 The gain estimation algorithm

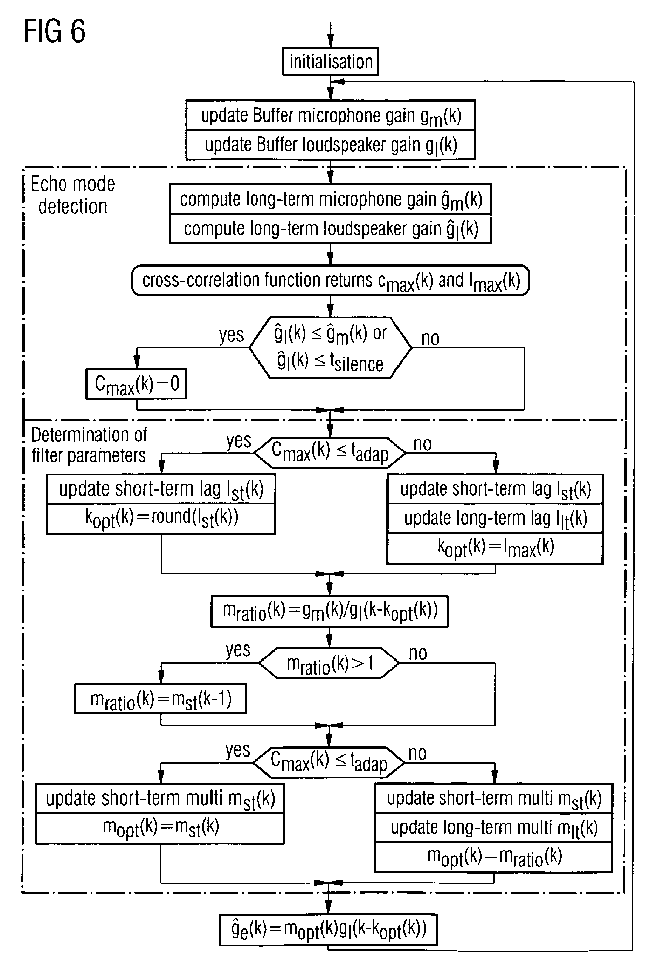

Principally, the estimation algorithm consists of two main parts: echo mode detection with correlation analysis and determination of the filter parameters $m_{opt}(k)$ and $k_{opt}(k)$. Thereby the periods of the conversation when only the far-end speaker is talking (2.3) is defined as echo mode. The flowchart of this algorithm is shown in Fig. 6 and is explained in the following.

### Echo mode detection

As the FIR filter needs to be updated with processed values of the loudspeaker and the echo gain, the single-talk mode of the far-end speaker, defined as echo mode, has to be detected. This is done on the basis of the energy of the loudspeaker and the microphone signal on the one hand and on correlation analysis on the other hand. Since the main part of the detection is the correlation analysis an approximate estimation of the loudspeaker and microphone signal energy is sufficient and therefore estimation (3.3) is used. Additionally the fixed gains are low-pass filtered in order to neglect short speech pauses during spoken words. Thus long-term gains of the decoder and encoder $\hat{g}_i$ are computed recursively

$$\hat{g}_i(k) = \beta \hat{g}_i(k-1) + (1-\beta)g_i(k) \; i \in \{l, m\} \; . \tag{5.2}$$

The auxiliary conditions for the echo detection is that the long-term gain of the loudspeaker path is bigger than a threshold for silence mode as well as that the long-term loudspeaker gain is bigger than the long-term microphone gain, i.e.

$$\hat{g}_l(k) > t_{silence} \tag{5.3}$$

and

$$\hat{g}_l(k) > \hat{g}_m(k) \; . \tag{5.4}$$

For this reason it is guaranteed that on the one hand the far-end speaker is talking and on the other that the energy measured in the loudspeaker path is bigger than the energy of the microphone signal. This is typical for echo mode but does not exclude double-talk mode. Therefore the fixed gain obtained by the decoder and the fixed gain obtained by the encoder are analyzed using the normalized cross-correlation function

$$C_{g_l g_m}(i) = \begin{cases} \dfrac{\sum\limits_{j=0}^{N-i-1} g_l(j+i)g_m(j)}{\sqrt{\sum\limits_{j=0}^{N-1} |g_l(j)|^2 \sum\limits_{j=0}^{N-1} |g_m(j)|^2}} & \text{if} \;\; i \ge 0 \\[2ex] C_{g_m g_l}(-i) & \text{else} \end{cases} \tag{5.5}$$

whereas $N$ is the length of the vector $\mathbf{g}_l(i)$ or $\mathbf{g}_m(i)$, respectively. These gain vectors are defined similar to Eq. (4.18). As one only can refer to fixed loudspeaker gains from the past the index of the correlation function (5.5) is bounded to non positive values $i \le 0$.

The result of the correlation function is the maximum correlation coefficient $c_{max}(k)$ and its corresponding lag $l_{max}(k)$

$$c_{max}(k) = \arg \max_i \; C_{g_l g_m}(i) \tag{5.6}$$

and

$$I_{max}(k) = C_{g_l g_m}^{-1}(c_{max}(k)).$$ (5.7)

The implementation of the correlation function (5.5) is described in detail in section 5.1.2. Finally the echo mode is detected due to the maximum correlation coefficient

$$c_{max}(k) > t_{adap} .$$ (5.8)

If the coefficient is bigger than the threshold $t_{adap}$ and (5.3) (5.4) are full-filled, then echo mode is observed and the FIR filter coefficients are adapted. Otherwise the parameters are adapted by long-term properties as described in the next subsection.

**Determination of the filter parameters**

The filter parameters $m_{opt}(k)$ and $k_{opt}(k)$ are determined depending on the echo mode detection. In a first stage the optimal sub-frame shift of the loudspeaker gain is specified. Therefore a short-term lag $I_{st}(k)$ and a long-term lag $I_{lt}(k)$ are processed

$$I_{st}(k) = \hat{\alpha}(k) I_{st}(k - 1) + (1 - \hat{\alpha}(k)) I_{max}(k)$$ (5.9)

$$I_{lt}(k) = \beta I_{lt}(k - 1) + (1 - \beta) I_{st}(k)$$ (5.10)

if echo mode is detected. Thus short-term and long-term properties of the calculated lag $I_{max}(k)$ are taken into account. We implemented the parameter $\hat{\alpha}(k)$ as a function of the correlation coefficient $c_{max}(k)$

$$\hat{\alpha}(k) = \begin{cases} -\frac{\alpha - 0.25}{1 - t_{adap}} c_{max}(k) + \frac{\alpha - 0.25 t_{adap}}{1 - t_{adap}} & \text{if} \quad c_{max} > t_{adap} \\ \alpha & \text{else} \end{cases}$$ (5.11)

so that the short-term lag is adapted slower or faster depending on the maximum correlation coefficient. As (5.11) is a decreasing function for $c_{max} > t_{adap}$ the smaller $\hat{\alpha}(k)$ gets the more the loudspeaker and the microphone gain are correlated. Thus short-term lag is updated stronger by the current maximum lag.
Finally in echo-mode the optimal sub-frame shift of the loudspeaker gain is set to the lag returned from the correlation function

$$k_{opt}(k) = I_{max}(k) .$$ (5.12)

Whereas if echo is not detected then the short-term lag $I_{st}(k)$ is updated with the long-term lag $I_{lt}(k)$

$$I_{st}(k) = \alpha I_{st}(k - 1) + (1 - \alpha) I_{lt}(k) .$$ (5.13)

and the optimal sub-frame shift is obtained by rounding the short-term lag

$$k_{opt}(k) = \text{round}(I_{st}(k)) .$$ (5.14)

As the short-term lag $I_{st}(k)$ is low-pass filtered and thus a continuous value it has to be rounded because the loudspeaker gain can only be shifted by full sub-frames.
A result of (5.13) is that the short-term lag converges towards the long-term lag. The advantage thereof is that after a change from echo mode to non-echo parts the optimal sub-frame shift $k_{opt}(k)$ is adjusted according to the long-term properties of the lag determined by the correlation analysis because of convergence.

Using the sub-frame shift the ratio of the microphone gain and the shifted loudspeaker gain is calculated

$$m_{ratio}(k) = \frac{g_m(k)}{g_l(k - k_{opt}(k))} . \tag{5.15}$$

If this ratio is bigger than one then it is set to the short-term multiplication factor of the previous sub-frame

$$m_{ratio}(k) = m_{st}(k - 1) \tag{5.16}$$

as the gain (which corresponds to the energy) of the echo should be smaller than the gain of the microphone signal. Because of this all multiplication factors $m_{ratio}(k)$ are bounded between zero and one and accordingly the optimal multiplication factor decreases the shifted loudspeaker gain indeed.

The multiplication factors are adjusted according to the echo mode detection too. During echo mode short-term and long-term factors are calculated in a similar way as the lags as we explained above.

$$m_{st}(k) = \hat{\alpha}(k)\, m_{st}(k - 1) + (1 - \hat{\alpha}(k))\, m_{ratio}(k) \tag{5.17}$$

$$m_{ll}(k) = \beta\, m_{ll}(k - 1) + (1 - \beta)\, m_{st}(k) . \tag{5.18}$$

The optimal multiplication factor used for the echo gain estimation is set to the ratio of (5.15)

$$m_{opt}(k) = m_{ratio}(k) . \tag{5.19}$$

In non-echo mode the short-term multiplication factor is updated with its long-term value

$$m_{st}(k) = \alpha\, m_{st}(k - 1) + (1 - \alpha)\, m_{ll}(k) \tag{5.20}$$

so that it converges towards the long-term factor. Finally the optimal multiplication factor is set short-term factor

$$m_{opt}(k) = m_{st}(k) . \tag{5.21}$$

### 5.1.2 Implementation of the cross-correlation function

The basis of the echo mode detection presented above is the cross-correlation function (5.5). As the gain estimation algorithm described in 5.1.1 should take into account short-term properties of the loudspeaker and microphone gains the correlation function has to be modified. Therefore the signals $g_l(k)$ and $g_m(k)$ are windowed using a rectangular window of length $Q$. On the one hand the window length must not be too small for statistically reasons and on the other hand it should not be too large, so that a short-term analysis is still possible. With these assumptions and considering non-positive correlation indices, Eq. (5.5) results in

$$C_{g_l g_m}(i,k) = C_{g_m g_l}(-i,k) = \frac{\sum\limits_{j=k-Q}^{k+i} g_m(j - i)\, g_l(j)}{\sqrt{\sum\limits_{j=k-Q}^{k} |g_l(j)|^2 \;\; \sum\limits_{j=k-Q}^{k} |g_m(j)|^2}} \tag{5.22}$$

whereas $k$ is the sub-frame index.

In order to reduce computational time, the sum of the numerator is decomposed so that it can be computed

recursively

$$\widetilde{g_l g_m}(i, k+1) = \sum_{j=k+1-Q}^{k+1+i} g_m(j-i)g_l(j)$$

$$= \sum_{j=k-Q}^{k+i} g_m(j-i)g_l(j) + g_m(k+1)g_l(k+1+i) - g_m(k-Q-i)g_l(k-Q)$$

$$= \widetilde{g_l g_m}(i, k) + g_m(k+1)g_l(k+1+i) - g_m(k-Q-i)g_l(k-Q). \qquad (5.23)$$

The sums of the normalization factor are decomposed in the same way.

$$\widetilde{g_l}(k+1) = \widetilde{g_l}(k) + |g_l(k+1)|^2 - |g_l(k-Q)|^2 \qquad (5.24)$$

$$\widetilde{g_m}(k+1) = \widetilde{g_m}(k) + |g_m(k+1)|^2 - |g_m(k-Q)|^2 \qquad (5.25)$$

whereas $\widetilde{g_l}(k+1)$ and $\widetilde{g_m}(k+1)$ refer to the sums in the denominator of (5.22). Thus only $2|i|+6$ multiplications and additions have to be performed to update $\widetilde{g_l g_m}, \widetilde{g_l}, \widetilde{g_m}$ and $|i| + 1$ multiplications are executed for normalization per sub-frame. By implementing the short-term cross-correlation function, two buffers of size $4Q$ byte[1] each are needed. These buffers are filled cyclically with the elements $g_l(k)$ and $g_m(k)$. Furthermore another buffer of size $4(|i| + 3)$ byte is used to save the sum $\widetilde{g_l g_m}, \widetilde{g_l}, \widetilde{g_m}$ $g_l g_m$, $g_l$, $g_m$.

### 5.1.3 Performance of the estimation algorithm

In order to analyze the echo gain estimation of this algorithm we arranged some tests. The fixed gain of the near-end speech was extracted at the decoder and passed to the algorithm. Additionally the decoded speech was convoluted with the impulse response of the LRM system (Fig. 2.2 a)) and mixed with near-end speech. This added signal was encoded while the fixed gain was extracted and also passed to the estimation algorithm. This algorithm computed an estimation of the echo gain and handled it over to the gain modification filter.

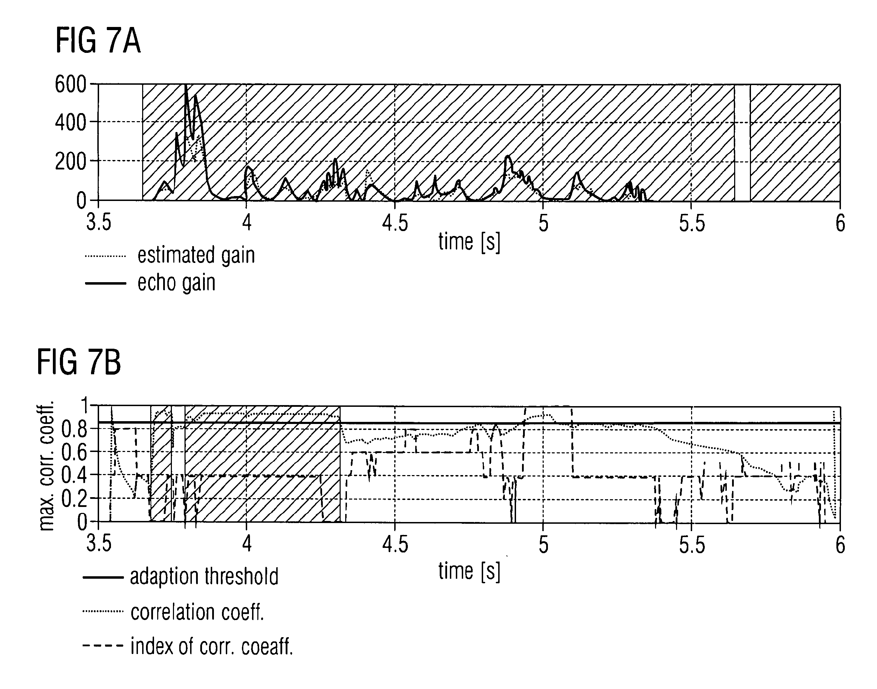

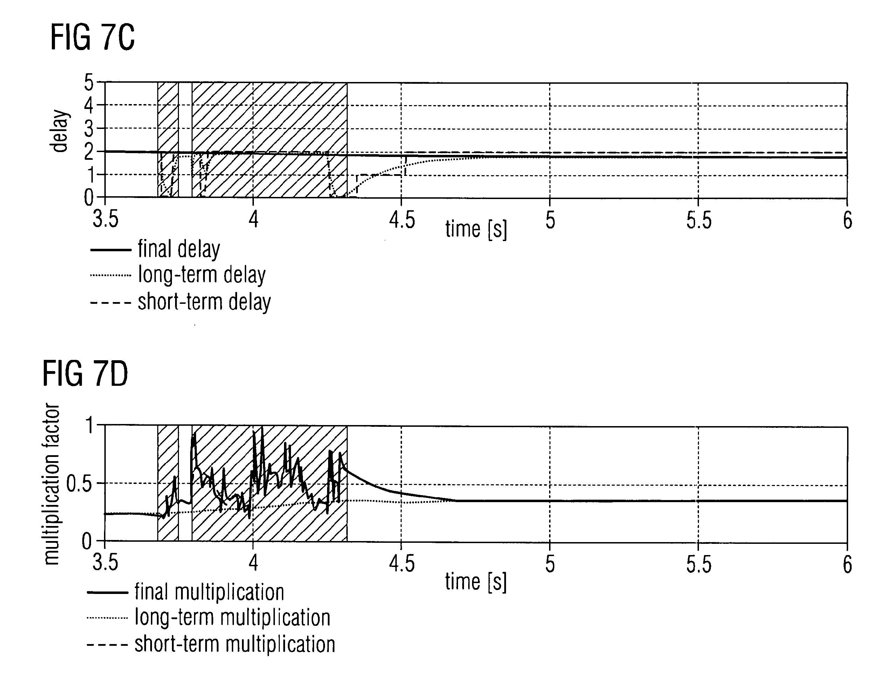

In Fig. 7 different signals of the echo gain estimation algorithm presented above can be seen. In subplot a) the fixed gain of the echo signal is compared to the estimated echo gain. Furthermore the speech modes are visualized using different background colors: light blue stands for single-talk far-end speaker, light red is the single-talk of the near-end speaker and the double-talk mode is colored in purple. One can see clearly that the estimated echo gain is about the real echo gain except at around 3.8 seconds.

In subplot b) the maximum correlation coefficient and its corresponding delay obtained by the correlation function (5.22) can be seen. During single-talk mode of the far-end speaker the maximum correlation coefficient is most of the time high. As conditions (5.3) and (5.4) are full-filled as well as the correlation coefficient is above a threshold, the far-end single-talk mode is detected as adaption phase (background colored green) most of the time.

One can regard the multiplication factor and the delay calculated by the algorithm in subplots c) and d). During adaption phase the loudspeaker gain is shifted by two sub-frames, which corresponds to 10 ms. If you compare this result with the first strongest peaks of the impulse responses in Fig. 2.2 the non-linearity of the AMR codec can be seen as one would suggest that the delay of the maximum correlation is one sub-frame. Any longer the multiplication factor, that decreases the loudspeaker gain, changes frequently in the adaption phase. Therefore the estimated echo gain is able to approximate the echo gain well. Furthermore the short-term and the long-term behavior of the multiplication factor and the delay are shown. During the adaption the long-term decreasing factor is slightly increased whereas the long-term delay was initialized properly. After the adaption phase one can see the short-term values converging towards the long-term values.

### 5.2 Estimation based on steepest descent

This estimation technique is based on a descent method towards the biggest negative gradient. Therefore an adaptive filter is used to modify the loudspeaker signal, so that this filtered signal converges against a desired signal. The adaption is done by changing the filter coefficients towards the negative gradient. First the adaptive filter algorithm

[1] The gains are in floating point representation, 1 float = 32 bit = 4 byte

is derived including the convergence proof of this method. Afterwards the algorithm is transposed to the parameter domain and a test is accomplished that shows if this algorithm is applicable for estimating the fixed echo gain.

### 5.2.1 The LMS algorithm

The Least Mean Square (LMS) algorithm is the most commonly used adaptive filter in the world today [10]. It is often used in system identification problems. In the time domain, the adaptive filter is used in echo cancellation problems to identify the impulse response of the LRM system. If this response is known, the acoustic echo can be reproduced by convoluting the loudspeaker speech with the impulse response of the adaptive filter. By subtracting the reproduced echo from the microphone signal, the echo part of the microphone signal is eliminated.

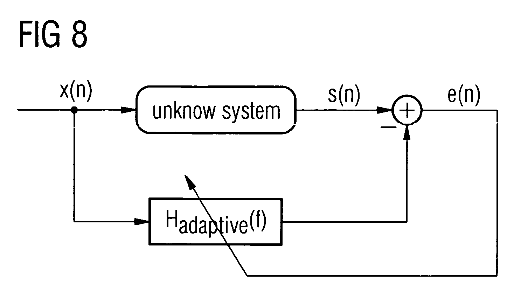

Though the speed of convergence of the LMS algorithm is rather slow, it remains popular because of its robust performance and simplicity. In this chapter this algorithm is explained first in the time-domain, i.e. we do not consider speech coding. The scheme of the LMS algorithm can be seen in Fig. 8

For the derivation speech samples of the loudspeaker path are summarized in an excitation vector of length $L$

$$x(n) = [x(n), x(n-1),..., x(n-L+1)]^T \qquad (5.26)$$

In addition a desired signal $s(n)$ is introduced. In the case of echo cancellation this signal is the echo plus any additional signal such as the speech of the near-end speaker. The speech samples of the excitation vector are weightened by the adaptive filter coefficients

$$h(n) = [h_0(n), h_1(n),...,h_{L-1}(n)]^T \qquad (5.27)$$

in order to get this desired signal. Furthermore an a priori error $e(n)$ is introduced. In the event of echo suppression this error is the residual echo. It is at time $n$

$$e(n) = s(n) - x(n)^T h(n-1) \, . \qquad (5.28)$$

The optimization criterion of the LMS algorithm is the expectation of the squared error

$$J(h) = E\{e(n)^2\} = E\{(s(n) - x(n)^T h)^2\} \, . \qquad (5.29)$$

The error is minimized by setting the derivation of $J(\mathbf{h})$ with respect to the adaptive filter coefficient vector h equal to zero

$$\begin{aligned} \frac{\partial J(\mathbf{h})}{\partial \mathbf{h}} &= -2E\left\{(s(n) - \mathbf{x}(n)^T\mathbf{h})\mathbf{x}(n)^T\right\} = -2E\left\{\mathbf{x}(n)(s(n) - \mathbf{x}(n)^T\mathbf{h})^T\right\} \\ &= -2E\{\mathbf{x}(n)s(n)\} + 2E\left\{\mathbf{x}(n)\mathbf{x}(n)^T\mathbf{h}\right\} \overset{!}{=} 0 \, . \end{aligned} \qquad (5.30)$$

The transpose operation in the third term of the first row of (5.30) can be omitted as $s(n)$ as well as $\mathbf{x}(n)^T\mathbf{h}$ are scalar.

Sorting the terms yields the matrix equation

$$E\{x(n)x(n)^T\} h = E\{x(n)s(n)\} \qquad (5.31)$$

or with the abbreviations $\mathbf{R}_{xx} = E\{\mathbf{x}(n)\mathbf{x}(n)^T\}$ and $\mathbf{r}_{sx} = E\{\mathbf{x}(n)s(n)\}$

$$R_{xx}h = r_{sx} \, . \qquad (5.32)$$

The matrix $\mathbf{R}_{xx}$ is the correlation matrix of the loudspeaker signal whereas $\mathbf{r}_{sx}$ is the cross-correlation vector of the loudspeaker signal with the desired signal.

Assuming that the inverse of $\mathbf{R}_{xx}$ exists, the optimal solution is

$$h_{opt} = R_{xx}^{-1} r_{sx}. \qquad (5.33)$$

Given a coefficient vector at sample period n - 1, we want to update this vector with another vector $\tilde{\mathbf{h}}$ of same length

$$\mathbf{h}(n) = \mathbf{h}(n-1) + \tilde{\mathbf{h}}(n) , \qquad (5.34)$$

where $\tilde{\mathbf{h}}$ is chosen to decrease the value of $J(\mathbf{h})$

$$J(\mathbf{h}(n)) = J(\mathbf{h}(n-1) + \tilde{\mathbf{h}}(n)) \leq J(\mathbf{h}(n-1)) . \qquad (5.35)$$

If the update vector is small, a Taylor approximation of order one yields

$$J(\mathbf{h}(n-1) + \tilde{\mathbf{h}}(n)) \approx J(\mathbf{h}(n-1)) + \tilde{\mathbf{h}}(n)^T \frac{\partial J(\mathbf{h})}{\partial \mathbf{h}} \Big|_{\mathbf{h}=\mathbf{h}(n-1)} . \qquad (5.36)$$

Using this in the inequality (5.35) and keeping in mind that $J(\mathbf{h}(n))$ is never negative, the inequality is written as

$$0 \leq J(\mathbf{h}(n-1)) + \tilde{\mathbf{h}}(n)^T \frac{\partial J(\mathbf{h})}{\partial \mathbf{h}} \Big|_{\mathbf{h}=\mathbf{h}(n-1)} \leq J(\mathbf{h}(n-1)) \qquad (5.37)$$

and is satisfied, if $\tilde{\mathbf{h}}$ is chosen to be proportional to the negative gradient of $J(\mathbf{h}(n))$ evaluated at $\mathbf{h}(n - 1)$

$$\tilde{\mathbf{h}}(n) = -\mu \frac{\partial J(\mathbf{h})}{\partial \mathbf{h}} \Big|_{\mathbf{h}=\mathbf{h}(n-1)} . \qquad (5.38)$$

The proportional factor $\mu$ is called "stepsize". With (5.30) and (5.28) the update vector finally gets

$$\tilde{\mathbf{h}}(n) = 2\mu \mathrm{E}\{\mathbf{x}(n)e(n)\} = 2\mu(\mathbf{r}_{sx} - (\mathbf{R}_{xx}(\mathbf{h}(n-1)) . \qquad (5.39)$$

As in general no a priori knowledge of $\mathbf{r}_{sx}$ and $\mathbf{R}_{xx}$ is available, the stochastic approximation is made. That is the expectation in (5.39) is simply ignored. Using this in (5.34) yields the LMS coefficient update

$$h(n) = h(n-1) + 2\mu x(n)e(n) . \qquad (5.40)$$

### 5.2.2 Convergence and NLMS algorithm

**Convergence**

The average coefficient vector convergence is easily derived by first restoring the expectations [14]. So, using (5.39) in (5.34), solving the resulting difference equation and applying (5.33), yields

$$h(n) = h_{opt} + (I - 2\mu R_{xx})^n (h_0 - h_{opt}) . \qquad (5.41)$$

By defining $\lambda_{xx,i}$ as the eigenvalues of $\mathbf{R}_{xx}$, one sees from (5.41) that $\mathbf{h}(n)$ converges towards $\mathbf{h}_{opt}$ if the expression

$$(1 - 2\mu\lambda_{xx,i})^n \to 0 \tag{5.42}$$

tends to zero. This is fulfilled for $\mu$ being bigger than 0 and smaller than the inverse eigenvalues at the same time

$$0 < \mu < \frac{1}{\lambda_{xx,i}}, \qquad i = 1...L. \tag{5.43}$$

Since $\mathbf{R}_{xx}$ is positive definite, all eigenvalues are also positive. So, the maximum eigenvalue of $\mathbf{R}_{xx}$ is less than the sum of its eigenvalues. The sum of the eigenvalues is equal to the trace which is in this case just $L$ times the variance $\sigma^2_x$ of $x(n)$. Thus, if we choose $\mu$ such that

$$0 < \mu < \frac{1}{L\sigma^2_x} \tag{5.44}$$

is true, then the convergence of $\mathbf{h}(n)$ is guaranteed.

**NLMS algorithm**

Further analysis indicates that LMS converges fastest when $\mu$ is in the middle of the range indicated by (5.44). To effectively use this fact, the stepsize must be a function of the variance $\sigma^2_x$. The result is called the Normalized LMS (NLMS) coefficient update

$$h(n) = h(n - 1)) + \frac{\alpha}{L\sigma^2_x} x(n)e(n) . \tag{5.45}$$

Comparing (5.45) to (5.40) the term of the coefficient update changed from $2\mu$ to $\frac{\alpha}{L\sigma^2_x}$. The 2 in the LMS update has been subsumed into the constant $\alpha$ and the factor $L\sigma^2_x$ appears in the denominator. If the stability analysis is worked out for (5.45) it turns out that (5.41) becomes

$$h(n) = h_{opt} + (I - 2\frac{\alpha}{L\sigma^2_x} R_{xx})^n(h_0 - h_{opt}) \tag{5.46}$$

and (5.44) gets to

$$0 < \alpha < 2 . \tag{5.47}$$

From (5.47) it is apparent that the range of stability is independent of the excitation power for NLMS.
For non-stationary signals such as speech, the estimation of $\sigma^2_x$ must be made time-varying. A good way of doing this is to replace $L\sigma^2_x$ with $x(n)^T x(n)$. This is easily updated each sample using the recursion

$$x(n)^T x(n) = x(n - 1)^T x(n - 1) + x(n)^2 - x(n - L)^2 . \tag{5.48}$$

So far, the NLMS algorithm is developed as a modification of the LMS algorithm in order to deal with non-stationary signals.

## Simulation and modifications of the NLMS algorithm

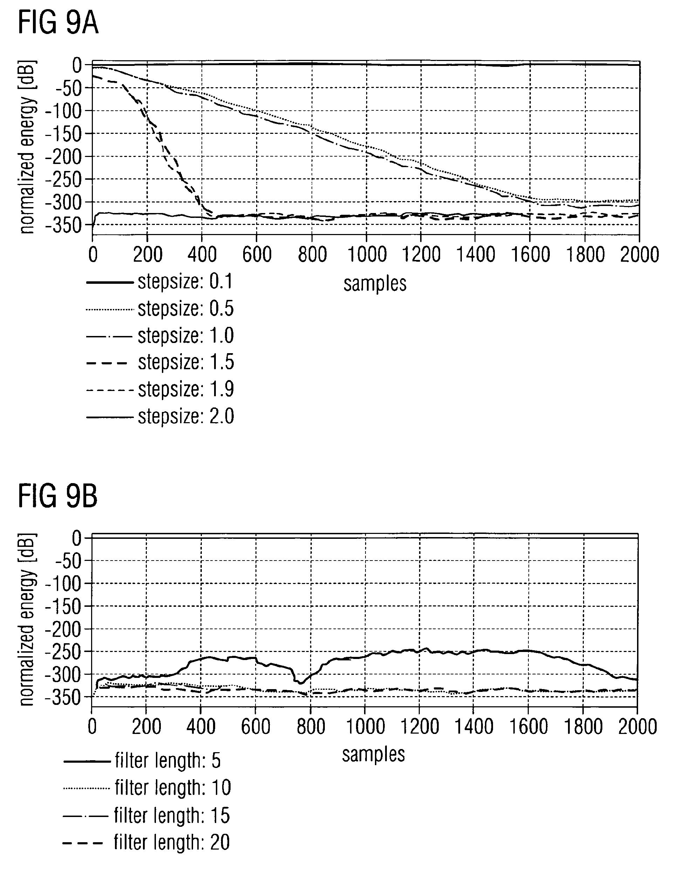

The NLMS algorithm is easily implemented by using (5.45) and (5.28) with recursive variance computation (5.48). Some tests were done to figure out the influence of the stepsize $\alpha$ on the speed of convergence. Furthermore the effect of the adaptive filter length was analyzed. Therefore an "artificial" impulse response of length ten was convoluted with white noise signal of variance one. As the impulse response was of norm one, the filter output signal is also white noise of variance one. The residual error (5.28) signals of these experiments are normalized to the filter output and can be seen in Fig. 9

In subplot a) the influence of the stepsize is depicted. One can see at once that the speed of convergence depends on the stepsize. The fastest convergence is achieved for a stepsize of 1.0 - it only takes some samples until the minimum floor of the residual error is reached. Moreover it is shown that the speed of convergence decreases the more the stepsize factor differs from one. If this factor is chosen to be of the open interval ]0 2[ near the limits it takes up to 1600 samples till the minimum error is obtained. Additionally, this residual error is bigger than the one got by a stepsize of one because of the speed of adaption. It is also pointed out that the algorithm is not converging if (5.47) is not fulfilled. Then the power of the residual error is equal to the variance of the filter output signal.

In Fig. 9 the residual error is illustrated by using adaptive filters of different length. The stepsize is chosen equal to one. One sees clearly that if the length of the adaptive filter is smaller than the system's impulse response, which has to be identified, then the minimum error is not reached. This is apparently as the impulse response of the unknown system can not be emulated by the adaptive filter. However the response can be reproduced if the filter length is longer as the last coefficients are adapted to zero.

The problem of echo cancellation using the NLMS algorithm in the time domain is that the impulse response is about 20 ms in cars (as shown in Fig. 2.2), but can last up to 300 ms in normal sized rooms [20]. To adapt these long impulse responses adaptive filter with up to 2400 taps are needed (if the sample frequency is 8 kHz). It is computational very intensive to run the adaptation algorithm with such long adaptive filters. Therefore different modifications are suggested [10, 14, 20, 17]:

- sub-band implementation

- partitioning the adaptive filter

- block processing

- frequency domain based implementations

## 5.2.3 Echo gain estimation using the NLMS algorithm

After the introduction of the NLMS algorithm and the achievement of some simulations with white noise have been presented in this chapter, we will try to use the steepest descent based algorithm to estimate the fixed gain of the echo. This estimation method is an expansion of the estimation algorithm described in section 5.1.1, where only one loudspeaker gain (from the present or past) was multiplied with a filter coefficient. By using the NLMS algorithm several loudspeaker gains are weightened with different coefficients and are summed up to get an estimation of the echo gain.

In other words we try to identify an unknown system consisting of the LRM system, the decoder of the loudspeaker path and the encoder of the microphone path. In contrast to the identification problem of the impulse response of the LRM system described in section 5.2.1 the unknown system is non-linear because of ARM codec. Thus we have to figure out if the identification problem of a non-linear system can be solved with the NLMS algorithm.

In order to apply the NLMS algorithm to estimate the echo gain we have to assume that the fixed gains are additive linked, so that it is possible to subtract the estimated echo gain from the microphone gain to minimize the error. This assumption is true as long as only single-talk mode is considered. Therefore the adaption of the filter coefficients is performed only during single-talk mode of the far-end speaker.

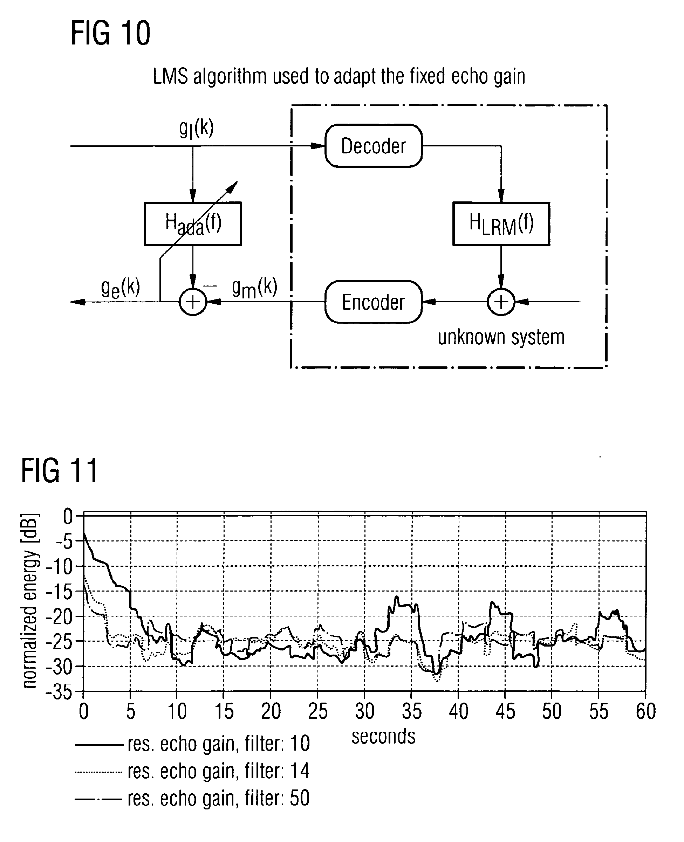

Fig. 10 shows the setup for the gain estimation. The NLMS algorithm is transfered to the parameter domain by concatenating the fixed gains of the loudspeaker path $g_l(k)$ to the vector x($n$) in (5.26). Moreover the gain of the microphone path $g_m(k)$ is defined as the desired signal s($n$). From this point of view the microphone gain is interfered by the speech of the near-end speaker. In contrast to the estimation algorithm presented in section 5.1, where the loudspeaker gain is shifted in sub-frames and multiplied by a scalar, the estimated gain is obtained by convoluting the gain vector of the loudspeaker path with the impulse response of the adaptive filter. According to this the estimated gain is a summed signal of previous loudspeaker gains weightened by the filter coefficients. The adaption criterion is to minimize the error derived by subtracting the estimated echo gain from the desired fixed codebook gain.

In Fig. 5.6 the error gain, or residual echo gain, is depicted for adaptive filters of different length. The adaption is performed in single-talk mode of the far-end speaker and the error signals are normalized by the microphone gains. In our experiments we use an impulse response of the LRM system of 512 samples (64 ms duration). As going from the time domain to the parameter domain corresponds to under sampling of a factor of 40, the adaptive filter has to be at least of 13 taps.

The effect of a undersized adaptive filter can be seen in Fig. 11: the residual echo is sometimes more than 5 dB bigger than using a sufficient sized filer. If the filter length is chosen to be bigger than 13 taps, then the error gains converge to the same minimal floor. Only the speed of convergence is different. The dependency of the filter length on the convergence floor was not seen in Fig. 5.4. This is because in the time domain the filter coefficients are initialized by zero values and the taps bigger than the impulse response, which is identified, are not adapted of course. In contrast to that all coefficients are adapted in the parameter domain as the unknown non-linear system can be approximated by filters of different length.

Furthermore it is shown in Fig. 5.6 that much higher error floors are obtained compared to the experiment accomplished with white noise. The reason of this purpose is again the non-linearity of the unknown system. Anyway the resulting error is about 25 to 30 dB below the microphone gain. Thus we can suggest that a good estimation of the echo gain is obtained by performing the NLMS algorithm. In the next chapter more statistical tests are presented in order to get a more precise statement of the performance of the different estimation methods.

**Claims**

1. Method for encoding an acoustic signal ($y(n)$) containing a speech component ($s(n)$) and an echo component ($e(n)$) by using an analysis through synthesis method, wherein for encoding the acoustic signal is compared with a synthesised signal for a time interval, the said synthesised signal being described by using a fixed codebook and an associated fixed gain, comprising the steps:

   a) Estimating the energy of the speech component ($s(n)$) of said acoustic signal ($y(n)$) by using the estimated fixed gain ($g_s$) of the speech component ($s(n)$);
   b) Estimating the energy of the echo component ($e(n)$) of said acoustic signal ($y(n)$) by using a fixed gain ($g_e(k)$) of the echo component;
   c) Forming a ratio (SER) of the energy of the speech component ($s(n)$) and of the energy of the echo component ($e(n)$);
   d) Deriving from the ratio a modification parameter ($H(k)$) for modifying the fixed gain ($g_y(k)$ of the acoustic signal.

2. Method according to claim 1 wherein the fixed gain ($g_s$) of the speech signal is estimated on basis of said ratio for one or more previous time intervals to the time interval, the fixed gain ($g_y(k)$) of the signal and the fixed gain ($g_e(k)$) of the echo component.

3. Method according to claim 1 or 2, wherein the synthesised signal is further described by an adaptive codebook and an associated adaptive gain.

4. Method according to claim 2 or 3, wherein the ratio is determined on basis of a previous time interval.

5. Method according to any of the previous claims, wherein said time intervalls are frames or subframes.

6. Method according to any of the previous claims, wherein the acoustic signal is recorded by a microphone.

7. Method according to any of the previous claims wherein the fixed gain ($g_e(k)$) of the echo component is calculated on basis of a fixed gain ($g_x(k)$) of a loudspeaker signal ($x(n)$) inducing the echo component $e(n)$.

8. Method according to claim 7, wherein the fixed gain ($g_x(k)$) of the loudspeaker signal ($x(n)$) of an earlier time interval having a certain time distance to the actual time interval, is chosen.

9. Method according to claim 8, wherein the time distance is determined by correlating the fixed gain ($g_x(k)$) of the loudspeaker signal and the fixed gain of the microphone signal and determining a maximum of said correlation.

**10.** Method according to any of the claim 1 to 6, wherein the fixed gain $(g_e(k))$ of the echo component is estimated by using an adaptive filter described by impulse response coefficients, that are chosen such, that the difference between the fixed gain $(g_e(k))$ of the echo component $(e(n))$ and the signal $(y(n))$ is minimised.

**11.** Speech coding apparatus with a processing unit set up for performing a method according to any of the claims 1 to 9.

**12.** Communications device, in particular a mobile phone, with a speech coding apparatus according to claim 11.

**13.** Communications network with a speech coding apparatus according to claim 10.

## FIG 1

far-end
Speaker
A

x(k) → Decoder → x(n) loudspeaker path → D/A → x(k) → L

$e(t) = x(t) * h(t)$

near-end
speaker
B

M  echo e(t)

y(k) ← Encoder ← y(n) microphone path ← D/A ← y(t) ← M

speech s(t)
noise n(t)

$y(t) = s(t) + e(t) + n(t)$

# FIG 2

adaptive codebook

Speech input
①

frame/subframe
partitioning

⑨ ② ③

Lag1

⑥ adaptive
codebook
search

LPC
Analysis

LPC
Quantization

④

$\dfrac{A_q(z)}{A(z/\gamma_a)}$

⑤

$g_a$

fixed codebook

⑧ Gain Quant. Table

0 ─→ $\dfrac{1}{A(z/\gamma_a)}$

old states ─→

⑨

gain codebook
search

Gain Quant. Table

$g_f$

0 states ─→ $\dfrac{1}{A(z/\gamma_a)}$

$e(k)$

fixed codebook
search

⑦

$D(l,j,g_a,g_f) = \underset{\substack{\text{sub-}\\\text{frame}}}{\sum} e^2_{l,j,g_a,g_f}(k) \to \min$

EP 1 521 240 A1

# FIG 3

adaptive codebook

Lag

fixed codebook

| 0 |
| 1 |
| 2 |
| 3 |
| j |
| M-1 |
| M |

Index of fixed codebook

Gain Quant. Table

Quantization Indices

Gain Quant. Table

quant. LPC coefficients

filter

## FIG 4

Decoder

other codec parameters

x(k) →

fixed gain $g_x(k)$

→ x(n)

gain estimation

$g_e(k)$

h(n)

e(n)

$\hat{g}_s(k)$     Filter     $g_y(k)$

y(k) ←

other codec parameters

Encoder

y(n)     $+$     s(n)

## FIG 5

$a_s$

s(n) → LPC filter → s'(n)

$a_y(\neq a_s \neq a_e)$

y(n) = s(n) + e(n) → LPC filter → y'(n) ≠ s'(n) + e'(n)

$a_e$

e(n) → LPC filter → e'(n)

## FIG 6

initialisation

update Buffer microphone gain $g_m(k)$

update Buffer loudspeaker gain $g_l(k)$

**Echo mode detection**

compute long-term microphone gain $\hat{g}_m(k)$

compute long-term loudspeaker gain $\hat{g}_l(k)$

cross-correlation function returns $c_{max}(k)$ and $l_{max}(k)$

yes $\quad \hat{g}_l(k) \leq \hat{g}_m(k)$ or $\hat{g}_l(k) \leq t_{silence}$ $\quad$ no

$C_{max}(k) = 0$

**Determination of filter parameters**

yes $\quad C_{max}(k) \leq t_{adap}$ $\quad$ no

update short-term lag $l_{st}(k)$

$k_{opt}(k) = round(l_{st}(k))$

update short-term lag $l_{st}(k)$

update long-term lag $l_{lt}(k)$

$k_{opt}(k) = l_{max}(k)$

$m_{ratio}(k) = g_m(k)/g_l(k-k_{opt}(k))$

yes $\quad m_{ratio}(k) > 1$ $\quad$ no

$m_{ratio}(k) = m_{st}(k-1)$

yes $\quad C_{max}(k) \leq t_{adap}$ $\quad$ no

update short-term multi $m_{st}(k)$

$m_{opt}(k) = m_{st}(k)$

update short-term multi $m_{st}(k)$

update long-term multi $m_{lt}(k)$

$m_{opt}(k) = m_{ratio}(k)$

$\hat{g}_e(k) = m_{opt}(k)g_l(k-k_{opt}(k))$

# FIG 7A

estimated gain
echo gain

# FIG 7B

adaption threshold

correlation coeff.

index of corr. coeaff.

EP 1 521 240 A1

## FIG 7C

final delay
long-term delay
short-term delay

## FIG 7D

final multiplication
long-term multiplication
short-term multiplication

FIG 8

x(n)     unknow system     s(n)    ⊕    e(n)

$H_{adaptive}(f)$

## FIG 9A

stepsize: 0.1
stepsize: 0.5
stepsize: 1.0
stepsize: 1.5
stepsize: 1.9
stepsize: 2.0

## FIG 9B

filter length: 5
filter length: 10
filter length: 15
filter length: 20

# FIG 10

LMS algorithm used to adapt the fixed echo gain

# FIG 11

——— res. echo gain, filter: 10

················ res. echo gain, filter: 14

—·— res. echo gain, filter: 50

**European Patent Office**

## EUROPEAN SEARCH REPORT

Application Number

EP 03 02 2250

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 2003/065507 A1 (GERLACH)<br>3 April 2003 (2003-04-03)<br>* abstract *<br>* page 1, paragraph 6 - paragraph 7 *<br>* page 2, paragraph 19 - paragraph 23 *<br>* page 3, paragraph 49 - paragraph 51 *<br>* page 4, paragraphs 54,56,58,74 *<br>* claims 6,7; figure 3 *<br>--- | 1-13 | G10L19/04<br>G10L21/02<br>H04B3/20<br>H04M9/08 |
| Y | US 6 011 846 A (RABIPOUR ET AL)<br>4 January 2000 (2000-01-04)<br>* abstract *<br>* column 1, line 47 - column 2, line 19 *<br>* column 4, line 7 - line 22 *<br>* column 5, line 55 - line 64 *<br>--- | 1-13 | |
| Y | US 6 577 606 B1 (LEE ET AL)<br>10 June 2003 (2003-06-10)<br>* abstract *<br>* column 2, line 13 - line 20 *<br>* column 3, line 39 - line 42 *<br>--- | 10 | |
| A | US 2003/152152 A1 (DUNNE ET AL)<br>14 August 2003 (2003-08-14)<br>* page 1, paragraph 6 *<br>* page 3, paragraphs 19,25 *<br>* page 4, paragraph 30 *<br>--- | 1,2,<br>11-13 | TECHNICAL FIELDS SEARCHED (Int.Cl.7)<br><br>G10L<br>H04B<br>H04M |
| A | CHANDRAN R ET AL: "Compressed domain noise reduction and echo suppression for network speech enhancement"<br>PROCEEDINGS ON THE 43RD IEEE MIDWEST SYMPOSIUM ON CIRCUITS AND SYSTEMS,<br>vol. 1, 8 - 11 August 2000, pages 10-13,<br>XP010558066<br>Lansing, MI, USA<br>* abstract *<br>* page 13, paragraph IV *<br>--- | 1,2,<br>11-13 | |

-/--

The present search report has been drawn up for all claims

| Place of search | Date of completion of the search | Examiner |
|---|---|---|
| THE HAGUE | 17 March 2004 | Santos Luque, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

# DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 109 154 A (NORTEL NETWORKS LTD) 20 June 2001 (2001-06-20) * abstract * * page 4, paragraphs 20,22,26 * * claim 1 * * figures 2-4 * | 1,11-13 | |
| A | GUSTAFSSON S ET AL: "COMBINED ACOUSTIC ECHO CONTROL AND NOISE REDUCTION FOR MOBILE COMMUNICATIONS" 5TH EUROPEAN CONFERENCE ON SPEECH COMMUNICATION AND TECHNOLOGY. EUROSPEECH '97., GRENOBLE: ESCA, FR, vol. 3 OF 5, 22 - 25 September 1997, pages 1403-1406, XP001045084 Rhodes, Greece * abstract * * page 1404, right-hand column, paragraph 3 - page 1405, left-hand column, paragraph 4 * | 1 | |

**European Patent Office**

**EUROPEAN SEARCH REPORT**

Application Number

EP 03 02 2250

TECHNICAL FIELDS SEARCHED (Int.Cl.7)

The present search report has been drawn up for all claims

| Place of search | Date of completion of the search | Examiner |
|---|---|---|
| THE HAGUE | 17 March 2004 | Santos Luque, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 02 2250

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2004

| Patent document cited in search report | | Publication date | Patent family member(s) | | Publication date |
|---|---|---|---|---|---|
| US 2003065507 | A1 | 03-04-2003 | EP | 1301018 A1 | 09-04-2003 |
| US 6011846 | A | 04-01-2000 | CA | 2262691 A1 | 30-12-1998 |
| | | | WO | 9859431 A1 | 30-12-1998 |
| | | | EP | 0920744 A1 | 09-06-1999 |
| | | | CA | 2245625 A1 | 25-06-1998 |
| | | | WO | 9827668 A1 | 25-06-1998 |
| | | | CN | 1212092 A | 24-03-1999 |
| | | | EP | 0883935 A1 | 16-12-1998 |
| | | | JP | 2000503837 T | 28-03-2000 |
| | | | JP | 3310302 B2 | 05-08-2002 |
| | | | US | 5943645 A | 24-08-1999 |
| US 6577606 | B1 | 10-06-2003 | KR | 240626 B1 | 15-01-2000 |
| US 2003152152 | A1 | 14-08-2003 | WO | 03069873 A2 | 21-08-2003 |
| EP 1109154 | A | 20-06-2001 | CA | 2328006 A1 | 15-06-2001 |
| | | | EP | 1109154 A2 | 20-06-2001 |

EPO FORM P0459

For more details about this annex : see Official Journal of the European Patent Office, No. 12/82